# EUROPEAN PATENT APPLICATION

(11) **EP 4 687 326 A1**
(43) Date of publication of application: **04.02.2026**
(21) Application number: 25191527.8
(22) Date of filing: 24.07.2025
(51) Int. Cl.: H04L 9/40, H04L 9/08, H04L 12/40

(54) **SECURE COMMUNICATIONS INCLUDING SECURE CHANNEL MULTIPLEXING**

(30) Priority: 29.07.2024 US 202418787265
(71) Applicant: Infineon Technologies AG, 85579 Neubiberg (DE)
(72) Inventor: ZEH, Alexander, 80333 München (DE); TINDELL, Kenneth William, Bury St. Edmunds, Suffolk, IP33 1XL (GB)
(74) Representative: Lambsdorff & Lange Patentanwälte Partnerschaft mbB

(57) **Abstract**

The described techniques address issues related to compatibility and cost-effectiveness of in-vehicle networks. The described techniques may utilize security protocols such as MACsec, for example, without the need to exchange separate key agreement messages and, consequently, meet the stringent starting time requirements for real-time control systems. Additionally, the described techniques may implement a secure channel multiplexing scheme that utilizes a session key management system to enable the use of a single secure channel at the endpoint (e.g. at each transmitting and receiving node) while supporting the implementation of multiple secure channels within a real-time control system. This advantageously allows for a significant reduction in the memory required by each node to store copies of session keys for each secure channel, as only a single session key needs to be stored locally by each node per secure channel.

## Description

### TECHNICAL FIELD

The disclosure generally relates to the use of secure data communications and, more particularly, to the use of secure communications that leverage locally stored key counter values in accordance with a real-time bus key distribution system to eliminate the need for dedicated key agreement messages and to facilitate secure channel multiplexing.

### BACKGROUND

Controller Area Network (CAN), Controller Area Network Flexible Data-Rate (CAN FD), Controller Area Network Extra Long (CAN XL), and Ethernet communication protocols are currently the dominant network/protocols implemented for use in automotive in-vehicle communications, which leverage an accompanying electrical/electronic (E/E) architecture. However, these conventional approaches have various drawbacks, particularly with respect to the communication overhead needed to distribute shared session keys that are used to authenticate, encrypt, and decrypt secured messages within the network.

Additionally, real-time control systems often implement a scheduling system for transmitting secured messages, which may be based upon message prioritization. Such systems typically implement such multiple secure channels to ensure that more urgent secured messages are timely delivered to specific nodes. To ensure secured communications occurs, each node in a conventional communication system stores a pre-shared long-term key associated with each node from which secured messages are to be received. Further complicating this issue, a set of secure channel specific pre-shared session keys are also derived from these pre-shared long-term keys and used to ensure secure messages are sent and received between nodes using specific secure channels. Thus, each node needs to store the pre-shared long-term keys as well as a copy of the secure channel specific pre-shared session keys to support secure communications across all secure channels during operation. This leads to the need for an increased memory footprint by each node, increased costs, and added complexity.

### BRIEF DESCRIPTION OF THE DRAWINGS/FIGURES

The accompanying drawings, which are incorporated herein and form a part of the specification, illustrate the aspects of the present disclosure and, together with the description, further serve to explain the principles of the aspects and to enable a person skilled in the pertinent art to make and use the aspects.
FIG. 1A illustrates the use of a conventional key agreement messaging protocol for low priority frames;
FIG. 1B illustrates the use of a conventional key agreement messaging protocol for high priority frames;
FIG. 2A illustrates an example node architecture, in accordance with one or more embodiments of the disclosure;
FIG. 2B illustrates an example key session generator, in accordance with one or more embodiments of the disclosure;
FIG. 2C illustrates an example received freshness value (FV) log, in accordance with one or more embodiments of the disclosure;
FIG. 2D illustrates another example node architecture, in accordance with one or more embodiments of the disclosure;
FIG. 3 illustrates an example system of interconnected nodes including defined secure zones, in accordance with one or more embodiments of the disclosure;
FIG. 4A illustrates an example format of a received secured message, in accordance with one or more embodiments of the disclosure;
FIG. 4B illustrates an example format of a transmitted secured message, in accordance with one or more embodiments of the disclosure;
FIG. 5 illustrates an example use of a hardware-based solution for utilizing freshness values, in accordance with one or more embodiments of the disclosure;
FIG. 6 illustrates an example hardware-based implementation for adapting the secured messaging system with an existing conventional system, in accordance with one or more embodiments of the present disclosure;
FIGs. 7A and 7B illustrate example process flows, in accordance with one or more embodiments of the disclosure;
FIG. 8A illustrates an example system of interconnected nodes storing session keys per defined secure channel, in accordance with one or more embodiments of the disclosure;
FIG. 8B illustrates an example system of interconnected nodes storing a single session key in accordance with a secure channel multiplexing technique, in accordance with one or more embodiments of the disclosure;
FIG. 9 illustrates a functional block diagram describing a secure channel multiplexing technique, in accordance with one or more embodiments of the disclosure;
FIGs. 10A-10B illustrate example formats of a secured message, in accordance with one or more embodiments of the disclosure; and
FIGs. 11A and 11B illustrate example process flows, in accordance with one or more embodiments of the disclosure.

The example aspects of the present disclosure will be described with reference to the accompanying drawings. The drawing in which an element first appears is typically indicated by the leftmost digit(s) in the corresponding reference number.

### SUMMARY

Again, conventional communication protocols and electrical/electronic (E/E) architectures have various drawbacks, particularly with respect to the processing power, overhead, and time required to generate the shared keys needed to ensure authentic and secure communications across the network. For instance, a typical E/E architecture used to communicate secured messages as further discussed herein may comprise a system of interconnected "nodes," which may represent any suitable type of device within a network that is configured to transmit and receive secure messages, such as sensors, electronic control units, actuators, electromechanical components, etc. The number of interconnected nodes in such systems may be on the order of tens or hundreds, and each node may transmit secured messages to and receive secured messages from other nodes within the interconnected system.

The underlying network supporting the system of interconnected nodes may be implemented as part of any suitable type of system that utilizes secured communications, such as for example an in-vehicle network, industrial-based networks such as those used in production lines, etc. For example, an interconnected system of nodes may comprise groups of nodes that communicate securely via a connected broadcast bus to facilitate a real-time control system. Such a real-time control system may utilize the communication of sensor data, control data, or other data, and may comprise components that, in the event of a failure, may represent a significant safety risk. Thus, specific operating parameters need to be considered to ensure robust secure communications within such systems.

For instance, any of the nodes in such a real-time control system may reset at any time (e.g. if an internal watchdog timer is triggered), and all data in the node's volatile memory (RAM) is lost as a result. Moreover, after a node starts (or restarts), the node must be able to resume communications very quickly, i.e. within a few milliseconds, to receive and send messages (e.g., sensor data, actuator commands, etc.) to and from other nodes on the bus. Furthermore, messages must be protected against tampering by an attacker, and potentially must also be encrypted to prevent an attacker from seeing the contents of the message. A node should also be protected against replay attacks (i.e., where an attacker takes a copy of a message sent on the bus and then transmits it again later to attempt to cause receiving nodes to act upon it). Additionally, the cryptographic systems for secure messaging must change keys when they become "exhausted" (i.e., have been used too often), and each group of nodes engaged in secure communications need to agree on the same values of a replacement key.

To this end, it is noted that secured messages are generated by a node prior to transmission via the use of one or more shared keys, which may also be referred to as shared secrets or secret keys, and generally do not change over the lifetime of the nodes. The shared keys are typically stored in the local memory of each node and provided as an input to a cryptographic block, which implements a cryptographic function such as a key derivation function (KDF). The cryptographic block also receives an input in the form of a counter value, which may change over time, as well as any other suitable inputs that are used to ensure a uniqueness of keys generated in this manner. The cryptographic block may thus output, for each set of inputs which includes at least the shared key and a counter value, one or more session keys, which may be used for the authentication and/or encryption of the secured messages. Thus, when symmetric encryption is implemented, the node(s) receiving the secured message utilizes the same session key(s) as the node that transmitted the secured message.

However, the shared keys and the session keys should not be transmitted unencrypted (i.e., in the clear) as doing so poses a significant security risk by exposing the pre-shared keys to potential attackers. Thus, to prevent the transmission of keys in the clear, conventional communication protocols and E/E architectures utilize a system referred to as key agreement. This process ensures that the nodes involved in secure communications agree to use the same session key (by means of a key agreement protocol) and, when the key is exhausted or otherwise needs to be updated, the nodes agree on a new session key. Thus, for a node that has restarted and forgotten all details of previous keys, the node cannot replay messages using an old session key.

Thus, a monotonically increasing sequence number is typically used to prevent replaying messages where the key has not changed, which may alternatively be referred to as a freshness value (FV). This is accomplished via the current Ethernet standard MKA (MACsec Key Agreement) protocol. However, this introduces issues when implemented as part of secure, real-time control systems. Specifically, the protocol takes too long to complete, and a node that has restarted has to wait far too long for a consensus to be established on a new session key before the node can once again receive and send secure messages (i.e., a large number of messages must be exchanged between a group of nodes and a central key server).

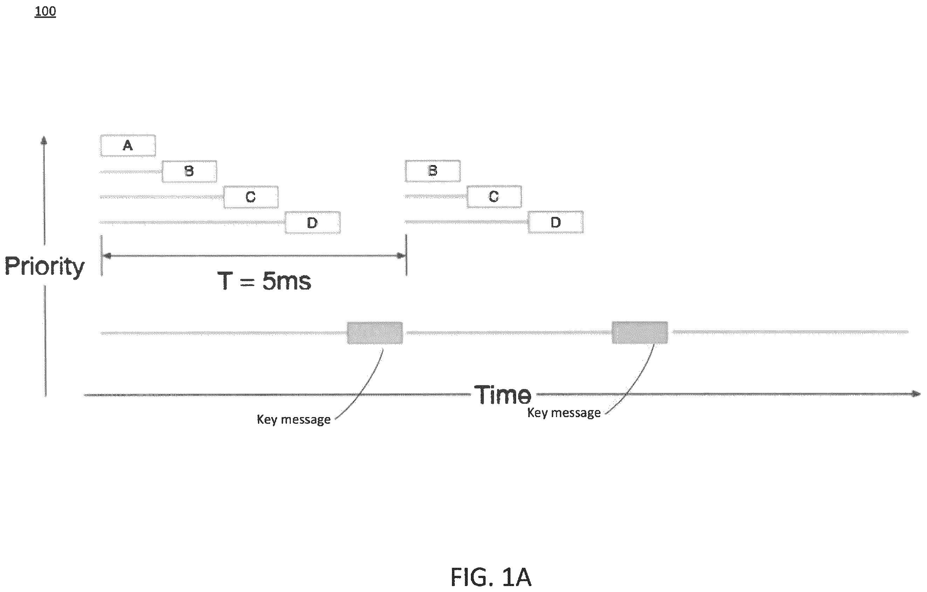

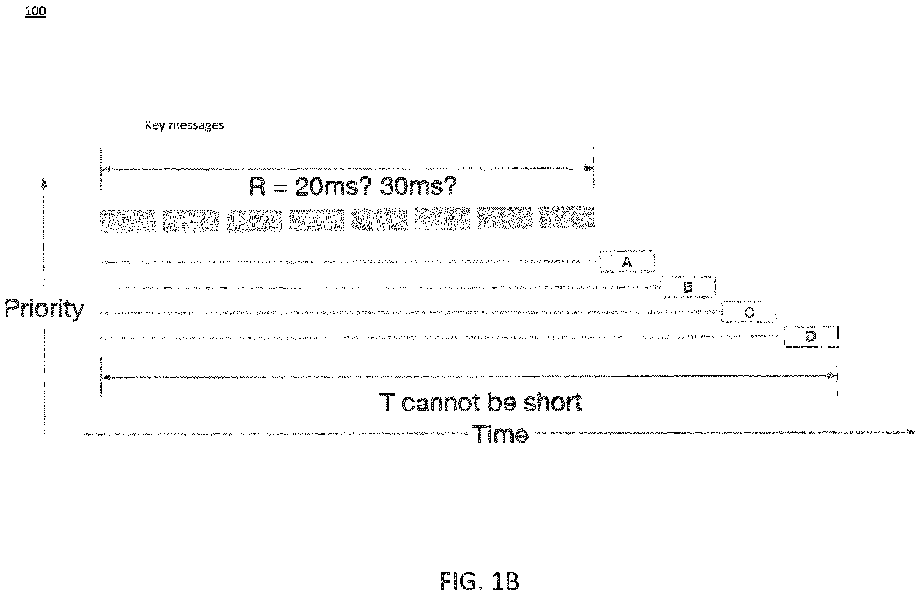

For instance, and turning now to FIGs. 1A and 1B, blocks A, B, C, and D represent high priority frames in accordance with a key agreement communication protocol, such as MACsec for example. Upon a disruption in communications, e.g., when a node is reset, the key messages need to be transmitted from each node to other nodes in the system to ensure a synchronization among all nodes in a group. Thus, the blocks at the bottom of FIG. 1A represent the key distribution messages when the secure messages are a lower priority. In this case, it is shown that secure communications cannot occur between the nodes B, C, and D until a new key message is distributed to each of the nodes B, C, and D. This adds latency to the secured communications and is thus undesirable for the communication of lower priority secured messages. This also introduces an issue for higher priority communications, as shown in FIG. 1B. Specifically, FIG. 1B illustrates the introduction of latency as a result of the need to distribute the key messages to each of the communicating nodes A, B, C, and D. Thus, conventional key agreement protocols are not suitable for nodes connected on a broadcast bus for use in real-time control systems, as such latency may introduce significant safety risks.

The embodiments as further described herein are directed to addressing this issue by achieving key agreement without the need to exchange separate key agreement messages and, consequently, meets the stringent starting time requirements for real-time control systems. This is achieved, as discussed in further detail below, using a group-wide key counter, with each node storing in its non-volatile memory the latest value of this counter that was observed via the last received secured message. This counter value increases monotonically, and nodes maintain synchronization by transmitting this counter value (or a representation of the counter value) in each secured message.

The counter may alternatively be referred to herein as a key counter because it is used (along with a pre-shared key, also stored in non-volatile memory) by the cryptographic block to derive one or more session keys, as noted above. Because different nodes in a communication group may utilize the same the cryptographic function, the same key counter and the same shared key yield the same session key. As a result, when nodes synchronize to the same group-wide key counter, the nodes are in effect agreeing to use the same session key.

Again, each secured message includes the key counter or, more precisely, a representation (e.g., a portion of bits) of the key counter to enable receiving nodes to establish the group-wide key counter value using their local copies, which again are stored in non-volatile memory. This facilitates key agreement because the key counter changes infrequently. Thus, the inclusion of a portion of the key counter, such as a lower predetermined number of truncated bits, is sufficient for each receiving node to verify whether the counter value used by the transmitting node (and sent in the secured message) matches the locally stored key counter at the receiving node. And because the key counter representation is carried in every secured message, there is no need for any separate key agreement messages. In other words, the key agreement is implicit in every secured message, and therefore no delay results from waiting for a consensus of agreement among nodes, as is the case for conventional systems.

Additionally, the embodiments described herein may implement a secure channel multiplexing scheme that utilizes a session key management system to enable the use of a single secure channel at the portion of each endpoint that is performing cryptographic decoding (for a receiver) or cryptographic encoding (for a transmitter) (e.g. at each transmitting and receiving node) while supporting the implementation of multiple secure channels within a real-time control system. That is, the embodiments described herein facilitate the implementation of any suitable number of secure channels, which may be multiplexed into a single secured channel. To do so, each node associated with a secure channel, e.g. nodes that transmit and receive a secured message within a secure channel, may generate a respective session key using that node's current key number (also referred to herein as a key counter value) as each secured message is transmitted or received. In other words, a node may generate each session key "on-the-fly" as secured messages are transmitted or received over each secure channel. This advantageously allows for a significant reduction in the memory required by each node to store copies of session keys for each secure channel, as only a single session key needs to be stored locally by each node regardless of the number of secured channels that are utilized. This locally-stored session key may then be overwritten (e.g. updated) as each secured message is transmitted and received.

### DETAILED DESCRIPTION

In the following description, numerous specific details are set forth in order to provide a thorough understanding of the aspects of the present disclosure. However, it will be apparent to those skilled in the art that the aspects, including structures, systems, and methods, may be practiced without these specific details. The description and representation herein are the common means used by those experienced or skilled in the art to most effectively convey the substance of their work to others skilled in the art. In other instances, well-known methods, procedures, components, and circuitry have not been described in detail to avoid unnecessarily obscuring aspects of the disclosure.

The embodiments herein are presented in two separate Sections for ease of explanation. Section I is directed to the use of secure communications that leverage locally stored key counter values that eliminates the need for dedicated key agreement messages. Section II is directed to a secure channel multiplexing scheme that leverages the use of these stored key counter values, which may alternatively be referred to herein as key numbers. Although the embodiments in Sections I and II are discussed separately, it is noted that any of the embodiments described in either Section I or Section II may be combined with one another, and any of the architectures, communication protocols, and/or techniques described in Section I are also applicable to the embodiments described in Section II, and vice-versa. For example, any of the embodiments as described herein with respect to Section I may optionally be implemented using the secure channel multiplexing embodiments as described in Section II. As another example, the secure channel multiplexing techniques described in Section II may leverage the use of the key number and counter system that is used by the nodes to generate the session keys in lieu of the need for dedicated key agreement messages.

### I. Secure communications leveraging locally stored key counter values

As discussed in further detail below, the embodiments described herein may be implemented in accordance with any suitable communication architecture that leverages a broadcast bus to facilitate secured communications among a system of interconnected nodes. The broadcast bus may be implemented, for instance, in accordance with what is referred to as a "multi-drop" scheme. In other words, although the embodiments described herein may function in accordance with a point-to-point communication architecture, the embodiments may be particularly useful for use in a point-to-multipoint communication architecture. Furthermore, although not limited to use in real-time control systems, the embodiments described herein may advantageously be implemented as part of such systems, which require heightened considerations with respect to security, timing, and robustness compared to conventional node-based communication networks.

For instance, and using a vehicle-based real-time control system as one example, the nodes in such real-time control systems may control safety-critical components such as vehicle steering, braking, acceleration, etc. As a result, it is crucial that secured messages between these nodes be sent and received with little latency, that nodes come back online quickly after being reset, and that nodes in the system are not adversely impacted while waiting for reset nodes to come back online. Moreover, due to the increased considerations with respect to safety and to resist reverse engineering attempts, a real-time control system needs to be resistant to malicious attacks, which may attempt to gain unauthorized access to keys or other system information.

For example, one such attack includes so-called "replay attacks," which force secured messages to be re-sent to other nodes out of order. To guard against such attacks, conventional systems utilize a "freshness value" (FV) to prevent replaying the same (legitimate) message to force receivers act on it at an invalid time. These conventional systems, which include the controller area network (CAN) bus and multi-drop Ethernet communication protocols such as 10BASE-T1S and 10BASE-T1L, results in out-of-order frames being transmitted due to priority queueing. Thus, such conventional systems have adopted an "acceptance window," although this still allows for replay attacks but confines such attacks to a window to attempt to limit this possibility. However, the primary disadvantage of such a system is that the window may be relatively large (e.g., 1 second), and as a result this reduces but does not eliminate the possibility of exposure to replay attacks.

Other attacks include denial of service attacks using the key agreement messages. As noted above, the use of conventional key agreement protocols requires a substantial number of such messages to be transmitted within the network, which scales quadratically with the number of nodes. It is thus possible to exploit the use of such a large number of messages to maliciously trigger a key re-agreement process to cause bus traffic to be disturbed. Moreover, such attacks may be used to trigger multiple key re-agreements to cause secure traffic to stop altogether.

Additional attacks include the re-use of secure channel indicator (SCI) values, the details of which are further discussed herein, to break assumptions about nonce re-use. For instance, a malware-infected node may use SCI values assigned to another node and force the device to send messages that could re-use a nonce value, implicitly leaking the session key. Still further, attacks may include denial of service attacks on a key agreement server, which may drive the server offline with a bus off attack, thereby preventing the server from issuing new keys.

The embodiments described herein address these issues to increase the robustness of real-time control systems to such attacks. To do so, the embodiments as further described herein do not utilize key agreement messages, and instead may operate independently of a key agreement server. Thus, instead of using a centralized key agreement system, the embodiments as described herein may maintain a locally stored copy of the counter values that would conventionally be derived from a central server. Again, a representation of the counter value may be transmitted as part of each secured message, which may be used by a receiving node to validate the counter and verify the secured message.

### A. Node Architecture

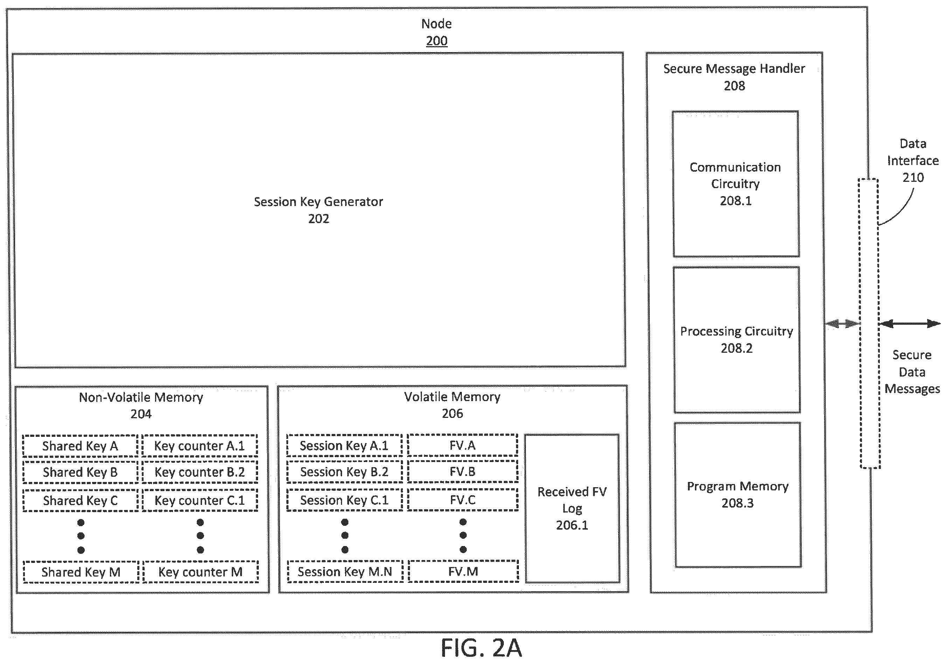

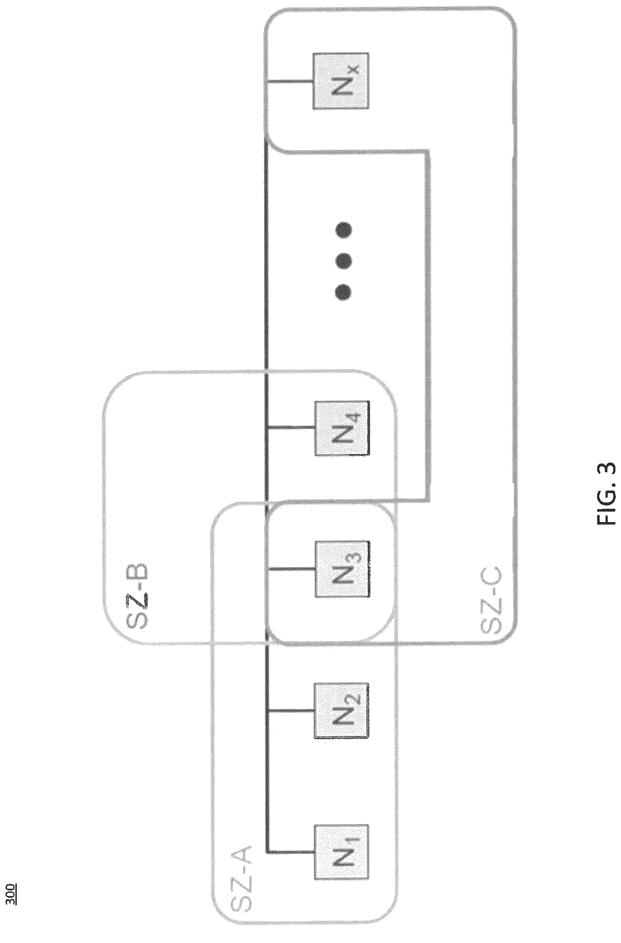

FIG. 2A illustrates a node architecture, in accordance with one or more embodiments of the disclosure. The node 200 may be identified with any suitable type of component, and may represent one node in a system of interconnected nodes, with such a system being illustrated in FIG. 3 and further discussed below. For example, the node 200 may be identified with part of an electronic control unit (ECU), a sensor, an actuator, a host, etc. The various nodes with such an interconnected system may differ in type and/or function, although each node may have a common functionality as discussed herein with respect to the node 200. Thus, each node in the system of interconnected nodes may be configured to transmit and/or receive secured messages in the same manner as that described herein with respect to the node 200.

The node 200 as shown in FIG. 2A may represent one node in the system of interconnected nodes configured to communicate over a bus according to a multi-drop scheme, as discussed herein. Such a multi-drop scheme may for, for example, be part of an in-vehicle E/E architecture as discussed above, which may include a CAN bus architecture or other suitable in-vehicle E/E architecture. The system of interconnected nodes may support the communication of secured messages in accordance with any suitable type of system, such as a real-time control system that may be implemented in a vehicle. Thus, the node 200 may be one of any suitable number of nodes that communicate with one another by transmitting and receiving secured messages via the data interface 210, which may be coupled to and/or form part of a bus that is used as part of any suitable type of point-to-point or multi-drop scheme. The data interface 210 may comprise any suitable number and/or type of data interface(s) to facilitate the exchange of secured messages between the node 200 and any suitable number of other nodes within the system of interconnected nodes.

The node 200 may transmit and/or receive secured messages as discussed herein to communicate with other nodes within the system of interconnected nodes using any suitable number and/or type of communication protocols and accompanying modes of operation. For instance, the node 200 may be configured to receive secured messages and to transmit secured messages in accordance with communication protocols that utilize the authenticated-encryption Galois/Counter Mode (AES-GCM)-SIV of operation, the Counter with CBC-MAC Modes (CCM) of operation, communication protocols that utilize modes of operation implementing the ShangMi 4 (SM4) cipher, any suitable type of Ethernet communication protocols (e.g. multi-drop Ethernet communication protocols such as 10BASE-T1S, 10BASE-T1L, the Ethernet MACsec standard, etc.), any suitable in-vehicle network protocols such as a Controller Area Network (CAN) communication protocol, Controller Area Network Flexible Data-Rate (CAN FD) communication protocol, a Controller Area Network Extra Long (CAN XL) communication protocol, any suitable communication protocols that implement Authenticated Encryption with Associated Data (AEAD) modes of operation, etc.

Again, the node 200 (as well as every other node in the interconnected system) is configured to transmit secured messages to other nodes and to receive secured messages transmitted by other nodes via the data interface 210. Thus, although each node in the interconnected system of nodes (which again includes the node 200) is configured to perform both transmitting and receiving functions, the term "transmitting node" is used herein when referring to any node that is currently performing the transmission of a secured message and/or performing any functions related to such secured message transmissions, whereas the term "receiving node" is used herein when referring to any node that is currently receiving a secured message and/or performing any functions related to such secured message receptions.

To perform secure message communications, the node 200 comprises a session key generator 202, a non-volatile memory 204, a volatile memory 206, and a secure message handler 208. These components are illustrated in FIG. 2A as being separate entities, with their corresponding functions being described separately for ease of explanation. However, any of the components of the node 200 may be integrated or otherwise combined with one another. The node 200 may also comprise additional or alternative components as those shown and discussed herein with respect to FIG. 2A. Furthermore, although the node 200 is shown and described herein with respect to the use of the non-volatile memory 204 and volatile memory 206, this is by way of example and not limitation. Any of the data stored in the non-volatile memory 204 and volatile memory 206 may be additionally or alternatively stored in other memories, which may be part of the node 200 or components external to the node 200. For example, any of the data that is illustrated in the Figures as being stored in a volatile memory may alternatively be stored in a non-volatile memory, and vice-versa. However, it is recognized that specific types of static data, such as the secret keys, may advantageously be stored in non-volatile memory to ensure their security. Further it may be of interest to assure persistence of static data, such as secret keys, in the event that a node goes offline and returns to the bus, as may be the case with a reboot of a node.

Furthermore, the node 200 is shown and discussed herein with respect to performing the functions of both secured message transmission and reception, although it will be understood that the node 200 may comprise separate components to perform each respective function, or alternatively comprise a combination of such components to selectively implement both functions independently of one another. Thus, the secure message handler 208 may represent an encoder, a decoder, or a combination of both an encoder and decoder to facilitate the node 200 operating in accordance with any of these aforementioned modes of operation.

The secure message handler 208 may comprise any suitable number and/or type of components, with an example of such components being shown in FIG. 2A by way of example and not limitation. For instance, the secure message handler 208 may comprise communication circuitry 208.1, which may be coupled to the data interface 210 and thus the accompanying bus of the system of interconnected nodes as discussed herein. Thus, the data interface 210 may comprise any suitable implementation of components for this purpose, such as for instance wires, buses, and/or respective terminals, ports, pins, etc. The communication circuitry 208.1 may be implemented as any suitable hardware components that enable communications between the node 200 and other nodes within the system of interconnected nodes, as further discussed herein, via the data interface 210. Thus, the communication circuitry 208.1 may transmit secured messages to the data interface 210 and receive secured messages from the data interface 210 in accordance with any suitable number and/or type of communication protocols, such as those discussed herein. To do so, the communication circuitry 208.1 may comprise hardware components, software components, or combinations of these, which are typically associated with components configured to perform data communications. For example, the communication circuitry 208.1 may comprise any suitable number of ports, drivers, transmit and/or receive buffers, switches, etc.

The processing circuitry 208.2 may comprise any suitable number and/or type of dedicated hardware components such as a microcontroller, an application specific integrated circuit (ASIC), a field programmable gate array (FPGA), a system on a chip (SoC), dedicated logic and/or other circuitry, etc. The processing circuitry 208.2 may be implemented as one or more processors and/or cores, which may execute computer-readable instructions stored in the program memory 208.3 to perform any of the various functions as discussed in further detail herein. Thus, although the processing circuitry 208.2 is illustrated in FIG. 2A as a separate entity from the session key generator 202, it is understood that the processing circuitry 208.2 may facilitate the operations of the session key generator 202 as further discussed herein, and thus the session key generator 202 and the processing circuitry 208.2 may, in some embodiments, comprise the same component(s).

The program memory 208.3 may comprise any suitable type of non-transitory computer readable medium such as volatile memory, non-volatile memory, or combinations of these. To the extent that the node 200 implements software-based solutions to perform the various functions as discussed herein, this may be achieved, for instance, via the processor circuitry 208.2 executing instructions stored in the program memory 208.3.

### B. Secure Zones

Again, the node 200 may represent one of several nodes that form a system of interconnected nodes. FIG. 3 illustrates an example of such a system of interconnected nodes, which comprises a total of X nodes. The node 200 may be identified with any of the nodes N₁- N_{X}, and each of the nodes N₁- N_{X} may transmit and receive secured messages in a similar manner as the node 200 as discussed herein.

The system of interconnected nodes 300 (also referred to herein as simply a system 300) may include any suitable number of secure zones (SZ), with three being shown in FIG. 3 for purposes of brevity, which are represented as the secure zones SZ-A, SZ-B, and SZ-C. These secure zones may be defined in accordance with any of the communication protocols as discussed herein, and nodes with the system 300 may identify the intended recipients of secured messages transmitted and received within these secure zones via the use of a secure channel indicator (SCI) field, as discussed in further detail below.

With continued reference to FIG. 3, each one of the secure zones in turn comprises a respective group of nodes. For example, the secure zone SZ-A of the system 300 as shown in FIG. 3 comprises the nodes N₁, N₂, and N₃. The secure zone SZ-B comprises the nodes N₃ and N₄, and the secure zone SZ-C comprises the nodes N₃ and N_{X}. The embodiments as discussed herein may implement the transmission and reception of secured messages in accordance with a particular secured zone within which the transmitting node and the intended recipients of the secured message form a part. However, the embodiments are not limited to their use with a system comprising such secure zones, and may be realized as part of any suitable communication system, i.e., with or without the use of secure zones.

### C. Key Generation and Management

To enable the use of secured messages, the node 200, as well as every other node in the system 300, stores a set of shared keys, on a secure zone basis when secure zones are utilized. In other words, each node in the system 300 stores a shared key, which may be alternatively referred to as a secret key or a shared secret, in a non-volatile (NVM) memory. Turning now to FIG. 2A, this is illustrated by way of the node 200 comprising a non-volatile memory 204, which is configured to store a shared key for each secure zone in which the node 200 is a member within the system 300. Thus, the node 200 may be identified with the node N₃ as shown in FIG. 3 for ease of explanation, as the node N₃ is a member of each of the secure zones SZ-A, SZ-B, and SZ-C. Thus, the node 200 in this case stores three shared keys A, B, and C, in the non-volatile memory 204. Of course, the node 200 may store additional or fewer shared keys based upon the number of secure zones in which the node 200 is a member. Therefore, in an embodiment, each node is configured to store, in its non-volatile memory, any suitable number M of shared keys, with M being greater than or equal to the number of secure zones to which the node is a member. For instance, the node 200 may store one shared key per secure zone, as shown in FIG. 2A, although this is by way of example and not limitation, as the node 200 may store any suitable number of shared keys per secure zone.

Thus, the NVM 204 may be implemented as any suitable type of non-volatile memory having any suitable size for storing any suitable number of shared keys. Each of the shared keys may represent a predetermined bit string or other suitable encoded numeric value having any suitable length. Each node within the same secure zone thus stores the same shared key in its respective NVM, which is used for the transmission and reception of secured messages for that secure zone, but not for other secure zones. For example, the nodes N₁, N₂ may only store the shared key A for secure zone A, whereas the node N₂ may only store the shared key B for secure zone B. The secret key is generally static and does not change over the operational life of a node, and thus may be flashed, written to, stored, etc., as part of an initial manufacturing process. Alternatively, the shared keys may be written to the NVM 204 via the node 200 or another suitable device. To ensure security, the shared keys are not included in the secured messages that are communicated between the nodes and are only be accessed or otherwise known by each node via its respective NVM, and thus is unknown to other nodes in the system 300.

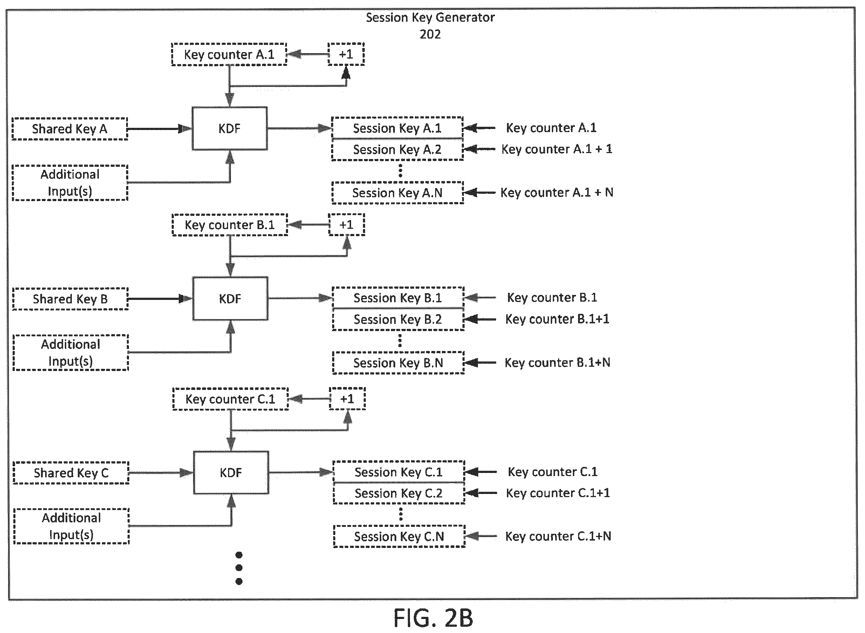

In any event, the "permanent" shared keys are used to facilitate the generation of temporary session keys, which may be referred to herein simply as session keys, and are used for transmitting and receiving secured messages within the same secured zones. To do so, reference is now made to FIG. 2B, which provides additional details with respect to the session key generator 202 as shown in FIG. 2A. The session keys are generated using a key derivation function (KDF), which represents a specific cryptographic function in accordance with the particular communication protocol that is implemented by the node 200. The use of KDFs are generally known, and thus additional detail regarding KDF operation is not described herein for purposes of brevity.

Like the shared keys, the session keys may represent a bit string or other suitable encoded numeric value having any suitable length. In any event, once generated, the processing circuitry 208.2 may use a respective session key per secure zone to generate each secured message that is transmitted to other nodes within the same secure zone, and also use this same session key to authenticate and/or decrypt secured messages received from nodes within the same secure zone. Thus, the processing circuitry 208.2 may execute any suitable type of cryptographic function that utilizes, as a cryptographic key, the generated session keys to generate the secured messages.

Additionally, it may be particularly advantageous to implement one session key for authentication purposes and a second one for encryption purposes at one node, as some cryptographic functions require distinct keys for authentication and encryption. It is further noted that, in some alternative implementations, an individual session key may be assigned to individual nodes participating in a secure zone. In such a scenario, for each secured message, the key derivation function (KDF) may be performed (i.e., transmit and/or receive). In particular, for an implementation of the KDF via hardware, this may be performed without penalty.

It is noted that the session key generator 202 may implement any suitable type of KDF to generate any suitable number of session keys from each respective shared key. That is, the session key generator 202 is configured to generate, for each one of the secure zones, a respective temporary session key using a respective shared key and a respective key counter value in accordance with a respective cryptographic function. Moreover, for the transmission of a secured message each group of nodes within a secure zone, each respective secured message comprises a plurality of fields, as further discussed herein, with one of the fields comprising a representation of the respective counter value used to generate the session key used to generate the secured message. Additional detail regarding the content and format of the secured messages is discussed further below.

The communication circuitry 208.1 is also configured to transmit secured messages to each group of nodes in accordance with the secured zone to which each recipient node belongs. Therefore, although multiple session keys may be generated from a single shared key, the same session keys are used to perform secured communications to and from nodes within the same secured zone at any one time. Thus, for communications to nodes within each secure zone, the KDF receives as inputs the shared key for that secure zone as well as a counter value. Each KDF may also receive additional inputs as shown in FIG. 2B, which may be any suitable values that are selected to ensure the generated session keys are unique per secure zone. For example, the additional inputs to the KDF may comprise an SCI value, a nonce (number used only once), etc. As a result, the same shared key may be used to generate multiple session keys per zone by modifying a different input to the KDF in each case.

In any event, it is noted that the same KDF algorithm will repeatedly generate the same session key from the same inputs. Thus, and as will be described in further detail below, other nodes may be configured with the same KDFs and shared keys to authenticate and/or decrypt secured messages using their own session keys and inputs, which should then match the session keys used when the secured message was generated by the transmitting node (i.e., prior to being received by the receiving node).

Although the session keys are described herein as being used to transmit secured messages to all other recipient nodes per secure zone, this is by way of example and ease of explanation. Specifically, the session keys as described herein may be implemented to generate secured messages that may represent authentication only messages or, alternatively, both authentication and encryption messages. For example, for the various AES-GCM-based protocols (which is used in MACsec), an integrity check value (ICV) is computed in accordance with their respective algorithms. For authentication only secured messages, the ICV is computed without encrypted data, and for authenticated and encrypted secured messages the ICV is computed in parallel with the encrypted data. Authentication only messages may be particularly useful, for example, in scenarios in which a message needs to be read first to quickly perform a specific control or execute a command without first decrypting the payload of the secured message. The embodiments as discussed herein may implement any suitable algorithms to compute the ICVs, including known techniques. In accordance with these cryptographic functions used to generate the ICV, the inputs typically comprise a key (e.g. the session key), a counter value ( e.g. the key counter value), the plaintext of the message (when present), and a current freshness value (FV) that is transmitted in the secured message.

In any event, based upon the particular cryptographic algorithm that is used to compute the ICV, the ICV may be generated using the same key as that used for the encryption of data (i.e. the encrypted payload) or a different key. In either case, the keys used for the generation of the ICV and for data encryption may comprise the transmitting node's locally stored session keys, which again may comprise the same session keys or different session keys, in various embodiments, which are identified with the key counter(s) for a specific secure zone. Thus, for authentication purposes, a transmitting node may utilize its locally stored session key to compute the ICV, whereas for authenticated and encrypted secured messages the transmitting node may use its locally stored session key(s) to compute the ICV and the encrypted payload. For both secured message types, the ICV is verified via the receiving node to establish authentication of the secured message, as further discussed herein.

Thus, embodiments include any suitable number of session keys being generated from the same shared key and KDF, with a different key counter value (or other different inputs) being used to generate each different session key in this manner. Alternatively, the session key generator 202 may generate any suitable number of different session keys per secure zone using the same inputs and KDF, but a different shared key, to thereby generate each different session key in this manner.

To provide an illustrative example, the session key generator 202 may be configured to generate, from each respectively stored shared key, two respective temporary session keys in accordance with the same cryptographic function. Thus, the same key counter value may be used to generate different session keys from the same shared key by varying other inputs to the KDF. Continuing this example, a first one of the temporary session keys generated in this manner may enable a receiving node to decrypt the secured message, whereas a second one of the temporary session keys generated in this manner may enable a receiving node to authenticate the secured message. In other words, the nodes within each secure zone may function in accordance with a predetermined scheme such that specific session keys are used for authentication, encryption, or both authentication and encryption, of secured messages.

Again, one variable with respect to generating different session keys from the same shared key is the key counter value, which may also be referred to herein as a counter value. Thus, each receiving node needs to ensure that its session key has been generated with the same key counter value as the transmitting node, or else the receiving node will be unable to authenticate and/or decrypt the secured message. In this way, the embodiments described herein advantageously enable nodes to synchronize their key counter values, and thus their session keys, without the use of key messages.

Thus, it is prudent to now provide additional detail regarding the conventional use of the key counter values. It is noted that conventional systems use a centralized server, control plane, host, etc., to maintain a global counter value, which needs to be communicated with the nodes as discussed above as part of the key agreement messages. However, the embodiments of the present disclosure recognize that the session keys may alternatively be maintained and derived locally, obviating the need for communications with a centralized entity for key agreement.

To do so, each node in the system 300 may comprise any suitable number of counters, with one per shared key as shown in FIG. 2B. The counters may be implemented as any suitable hardware components, software components, or combinations of these, which enables the generation of unique counter values that may be represented as any suitable number of bits. Each counter may be implemented, for example, to generate a monotonically increasing counter value that is incremented in response to one or more predefined conditions being satisfied, which may be the result of a "re-keying" event. Such a re-keying event may occur, for example, in response to any suitable number of conditions, which may be voluntary or triggered by a security alert. For example, a node may perform a re-keying when a number of secured messages are transmitted with a respective session key in excess of a predetermined number of messages (i.e., session key "exhaustion"), the expiration of a predetermined time period, each system boot, etc. To provide another example, the re-keying conditions may comprise a security alert that may be detected by a centralized server, another node, a host processor, etc. The security alert may be sent to the node 200 via the data interface 210 or other suitable data interface, and explicitly instruct the node 200 to perform a re-keying process.

Thus, the processing circuitry 208.2 of the node 200 may periodically perform a re-keying process in accordance with the various conditions as discussed above. In an embodiment, the processing circuitry 208.2 may implement a rate-limiter that is configured to limit the number of re-keying operations within a particular time period. This may include, for example, a prioritization-based system that may be implemented via the node 200. Such a system may account for watchdog reset loops, for example, and comprise the storage of one or more priority flags in the NVM 204, the presence of which overrides the triggering of the re-keying process. For example, the non-volatile memory may store such a flag, which is indicative of some event that, when present, overrides the re-keying process. Thus, while the flag is stored in the NVM 204, the processing circuitry 208.2 will not perform a re-keying operation despite any of the aforementioned conditions being met. The priority flag may be cleared after the passage of a predetermined time period, once the event has ended, etc., such that the key counter is not incremented while the priority flag is set.

In some embodiments, the processing circuitry 208.2 may implement (e.g. via execution of instructions stored in the program memory 208.3) a stable storage algorithm, which may alternatively be referred to as an atomic storage algorithm, to perform the re-keying process. Stable storage is a classification of computer data storage technology that guarantees atomicity for any given write operation and allows software to be written that is robust against some hardware and power failures. To be considered atomic, upon reading back a just written-to portion of the disk, a storage subsystem should return either the write data or the data that was on that portion of the disk before the write operations. Stable storage algorithms generally aim to eliminate corrupted data in storage. To do so, the data is stored more than once, or with an error correcting code, so that it is possible to always read the most recent non-corrupted value. The use of such a stable storage algorithm may be particularly useful to guard against a power failure or glitch during the incrementation process not resulting in a corrupted key counter value.

In such a case, the session key generator 202 stores the updated (i.e., incremented) key counter value in the non-volatile memory, e.g. by overwriting the previous key counter value for that shared key with a new key counter value. The session key generator 202 also generates, from the respective shared key and the incremented key counter value, an updated temporary session key in accordance with the KDF, as shown in FIG. 2B. Thus, the session keys are generated via the KDF from the shared keys and the current key counter values (as well as other inputs), with the shared keys and the counter key values both being stored in the NVM 204. As re-keying events may be secure zone specific, this is illustrated in FIG. 2A via the key counter for secure zone B being incremented, whereas the key counter values for secure zones A and C are not.

For example, and as shown in FIG. 2A, the NVM 204 may store any suitable number of key counter values, which are correlated to each of the stored shared keys. In this way, the NVM 204 stores, for each one of the secure zones, a respective shared key and a respective key counter value. That is, the key counter values may be different than one another among the different secure zones, although the value of each key counter may be synchronized among the nodes within each secure zone, as further discussed herein.

A representation of this key counter value may be included in each secured message in unencrypted form, i.e., "in the clear." Therefore, and as discussed in further detail below, each receiving node may verify the validity of the key counter value based upon a comparison of the key counter value representation in the received secured message with the receiving node's locally stored key counter value. Because each node in the system 300 may store key counter values in this way, a receiving node may determine whether a counter value that is computed from the counter value representation contained in the secured message matches the locally stored counter value.

If not, then the receiving node may increment and overwrite its locally stored key counter value to match the counter value used to generate the session key and secured message, pending verification of the secured message as discussed in further detail below. That is, prior to updating the locally stored key counter value in this way, the receiving node may validate the key counter value represented in the secured message by generating a session key (via its session key generator) from the computed counter value (i.e., the counter value representation sent in the secured message). This temporary session key is then used at the receiving node to verify a corresponding integrity check value (ICV) contained in the secured message. In other words, the representation of the counter value in the secured message enables a receiving node to derive a temporary session key, which is used to validate the counter value used by the transmitting node to generate the session key that was used to generate the secured message. This process is described in further detail below.

Again, the session keys generated by the session key generator at any time are considered temporary, and may be changed upon the key counter values being incremented as noted above. Thus, the volatile memory 206 is configured to store each of the session keys generated via the session key generator 202. The temporary session keys may be overwritten or deleted as updated session keys are generated (e.g. upon the counter value being incremented), as discussed above.

The secured messages may also be transmitted with a representation of a sequence number. The sequence number may comprise, in some embodiments, a freshness value (FV), such as the freshness value that is defined in accordance with any of the communication protocols as described herein. However, although referred to herein as a freshness value, the sequence numbers are not limited to freshness values as defined in any specific communication protocol or standard, and may comprise a bit string or other suitable encoded numeric value having any suitable length, which may be used to enhance security measures by preventing a replay attack.

Thus, the freshness value is also a changing, temporary value, and thus the volatile memory 206 may also store the most recent freshness value for each transmitting node that is correlated to each session key (and in turn the key counter value), as shown in FIG. 2A. As a security measure, the processing circuitry 208.2 may increment the freshness value after each secured message is transmitted and after each secured message is received. That is, the freshness value may have an initial, predetermined value (e.g., 1) that is incremented by a transmitting node when each secured message is transmitted and is also incremented by a receiving node as each secured message is received.

It is noted that the secured messages may arrive at a receiving node out of order, i.e. the buffering scheme used by a transmitting node will typically send a higher priority message ahead of a lower priority one. Thus, conventional systems typically accept out of order messages, but use a "window" so replayed messages will need to be relatively recent, with the hope that this provides adequate protection against such attacks. Furthermore, conventional systems use multiple sequence numbers at each transmitting node (one for each secure channel) and then the transmitting node ensures that within each of its secure channels, the sequence numbers are transmitted in order.

Due to the use of key counter values as described herein, the embodiments as discussed herein extend this conventional use of the freshness values in several different ways. First, each receiving node stores a log of previously received freshness values that were contained in previously received and accepted secured messages, which are correlated to each transmitting node, secure zone, and current key counter value. The number of logged freshness values stored in this manner may be any suitable number depending upon the particular application.

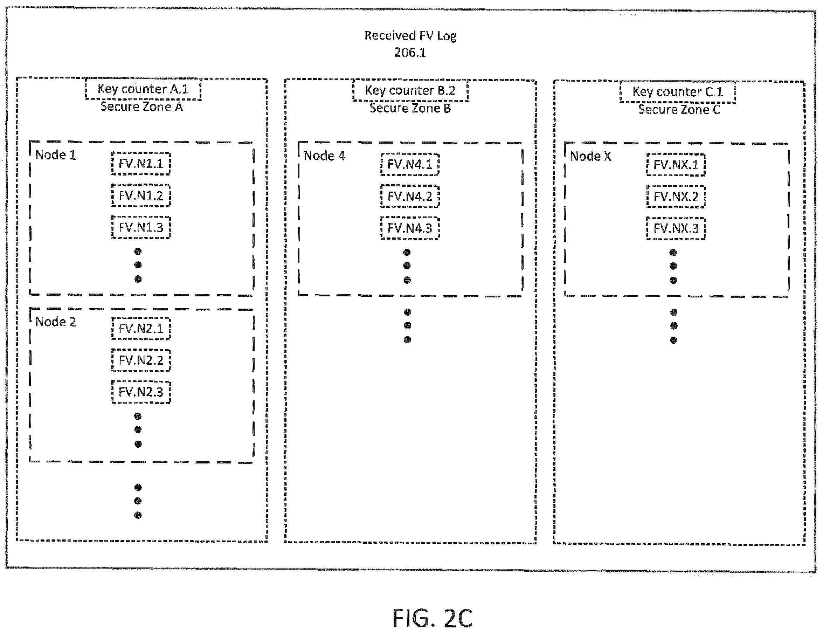

Additional details regarding the log of received freshness values are shown in FIG. 2C, which illustrates that each key counter value is correlated with its previously received freshness value numbers for each transmitting node and per secure zone. Thus, the received FV log 208.1 as shown in FIG. 2C includes one set of logged freshness values per node, because each of the nodes is part of only one secure zone in this example. However, this is by way of example and not limitation, and the received FV log 208.1 may store any suitable number of freshness values for each transmitting node based upon the number of secure zones within which each node is a member. For example, if the node N₄ was also a part of the secure zone A, then the received FV log 208.1 would also store a log of freshness values received from node N₄ via the secure zone A (not shown).

Thus, the receiving node uses the freshness value in each received secured message to determine whether a current secured message from a specific transmitting node has already been received. To do so, the receiving node references the stored set of logged freshness values for that particular transmitting node, which may be identified via the transmitted SCI value, as further discussed below. In the event that a new received secured message does not have a freshness value greater than the last recorded freshness value, then the secured message is discarded as a replay. It is noted that the first secured message received is always accepted by the receiving node, i.e. prior to the history of previously received freshness values being available.

Second, when the local key counter value is changed (i.e. during a re-keying process in which the key counter value is incremented), the transmitting node resets the freshness value (for the particular secure zone for which the key counter was reset) to an initial, predetermined value (e.g. 1). The receiving node is configured to recognize the initial freshness value in a secured message that is received after such an event occurs. Thus, after a re-keying event occurs, the receiving node may continue to store any suitable predetermined number of the last received freshness value for previously-used key counter values so that older secured messages still working their way through the priority queues (and hence with old counter values) are still validated even after the receiving node has moved on to using a new key counter value. Alternatively, freshness values stored in this manner may be deleted after a predetermined time period has elapsed upon using a new key counter value. In this way, a receiving node may still receive and accept secured messages across a rekeying event, and will accept the first message transmitted after a re-keying process has occurred.

The freshness values may serve different purposes for both the transmitting and receiving nodes. For instance, a transmitting node may compare the incremented freshness value after transmitting a secured message to a predetermined freshness value threshold to determine whether a threshold number of secured messages have been transmitted, thereby triggering the re-keying process as noted above. For example, because the transmitting node generates and stores a different session key for each secure channel, the transmitting node may use the freshness value to count messages using the session key, i.e. a number of secured messages transmitted per session key. When the freshness value for a particular secure zone reaches a predetermined threshold value, the transmitting node may increment the key counter as part of a re-keying process as noted above.

Thus, the predetermined threshold value may comprise a value per node or a value that represents a sum across any suitable number of nodes, such as those within the same secure zone, for instance. In other words, when the same session key is in use across all other transmitting nodes in the same secure zone, a quota may be established for this threshold such that the quota for all nodes in the secured zone sums to less than an exhaustion count (i.e. the predetermined threshold value) for the session key.

In an embodiment, the exhaustion counter may be implemented using the transmitting node ID (or SCI) in the KDF used to generate the session keys, such that there are unique session keys for each transmitting node. In this case, a transmitting node's exhaustion count may be identified with the use of its own session key, which reduces the number of re-keying processes because the quota is not shared among several nodes.

Thus, the KDF implemented by the session key generator 202 may optionally receive, as part of the additional inputs as shown in FIG. 2B, a secure channel identifier (SCI), which is unique across the system. The concept of a secure channel, and the carrying of a secure channel identifier, is part of the Ethernet MACsec standard as well as other communication standards, and is further discussed below.

### D. Secured Message Format and Communication Protocol

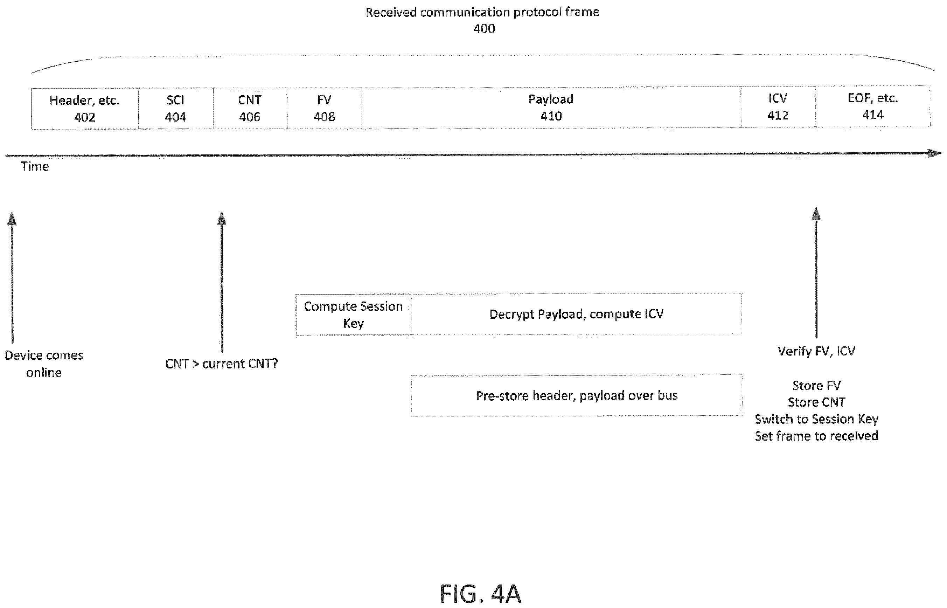

FIG. 4A illustrates a secured message format and accompanying processing timeline, in accordance with one or more embodiments of the disclosure. The secured message as shown in FIG. 4A may be transmitted in accordance with any suitable communication protocol, and may constitute a communication protocol frame 400 comprising any suitable number of fields. Again, the communication protocol, and thus the accompanying communication protocol frame 400 as shown in FIG. 4A, may be identified with any suitable type of communication protocol that may be implemented to facilitate the communication of secured messages via a multi-drop bus architecture. For instance, the communication protocol frame 400 may be identified with a CAN communication protocol frame, a CAN FD communication protocol frame, a CAN XL communication protocol frame, an Ethernet (e.g., multi-drop Ethernet such as 10BASE-T1S, 10BASE-T1L) communication protocol frame, a FlexRay communication protocol frame, a local interconnect network (LIN) communication frame, etc.

In any event, the communication protocol frame 400 may be identified with a secured message that is generated by a transmitting node using a temporary session key for a specific secure zone, as discussed herein with respect to the node 200. The communication protocol frame 400 may include additional, fewer, or alternate fields as shown in FIG. 4A. For example, the communication protocol frame 400 comprises a header 402, an SCI 404, a representation of the counter value (CNT) 406 used to generate the secured message, a freshness value 408, a payload 410, an ICV 412, and an end-of-frame (EOF) identifier 414. The communication protocol frame 400 may be subsequently received by a receiving node as a secured message, which is either accepted or rejected, as further discussed below.

A secure channel within a secure zone comprises a single writer and multiple readers, and thus identifies a secure zone comprising nodes within the system of interconnected nodes that are intended recipients of a secured message. An SCI value may be identified via various communication protocols, such as the CAN XL communication protocol and the Ethernet MACsec standard. For example, according to the MACsec standard, the secure zone is defined by the shared key, and that SCI is used to identify a transmitting node. For example, the SCI may be used as one of the inputs to the KDF to generate unique session keys for each transmitter.

Each secure channel is thus identified with a respective SCI, and is unique in the physical and logical network. Thus, the secure zones SZ-A, SZ-B, and SZ-C as shown in FIG. 3 are each defined by a separate and unique SCI. The processing circuitry 208.2 of the node 200 is configured to generate the secured message having comprising an SCI value that indicates which one of the secure zones for which the secured message is intended, i.e. the SCI identifies the secure channel and, in turn, the recipients within the secure zone to which the message is transmitted. The communication protocol frame 400 is assumed to be received by a receiving node that is in the same secure zone as the transmitting node, which again is indicated via the SCI value. Another use for the SCI to avoiding the window problem for out of order freshness values. That is, different SCIs can be used for different priorities so that they are in-order within the same SCI (and therefore the FV is attached to an SCI rather than a transmitting node). The SCI may also be used at the application level to identify a subgroup of receiving nodes within a secure zone.

The representation of the counter value 406 (also referred to herein as CNT 406) may comprise the entire key counter value that was used by the transmitting node to generate the session key or, alternatively, a truncated portion of the key counter value. For instance, the CNT 406 may comprise a predetermined number of lower significant bits (e.g., 4, 6, 8, etc.) of the full length key counter value that the CNT 406 represents.

Thus, a receiving node (e.g. the processing circuitry 208.2) may determine whether its local key counter value stored in the NVM 204 matches the CNT 406 by comparing either the entire stored key counter value for the secure zone as indicated by the SCI or, alternatively by comparing the truncated portion of the CNT 406. Comparing only the truncated lower significant bits of the counter value in this way is sufficient because the key counter value does not change frequently, e.g. only in response to the re-keying conditions as noted herein.

Continuing this example, if the receiving node's locally stored key counter value is determined to match the key counter value derived from the CNT 406, then the receiving node may retain its locally stored key counter value as is, determine that the key counter value represented by CNT 406 is valid, and accept the secure message. Additionally or alternatively, the receiving node may determine that the key counter value represented by CNT 406 is "provisionally" valid when the receiving node's locally stored key counter value is determined to match that derived from the CNT 406, i.e. subject to further verification processes.

For example, the processing circuitry 208.2 of the receiving node may be configured to validate the key counter value represented by the CNT 406 by verifying the secured message in various ways. Thus, upon verification of the message, the key counter value derived from the CNT 406 is determined to be valid, and thus the secured message is accepted. The verification may include, for example, the receiving node calculating a session key from the key counter value that is derived from the CNT 406. Thus, the session key that is generated in this manner should match the session key used by the transmitting node to generate the secured message, and should also match the session key stored locally at the receiving node when the key counter value that is derived from the CNT 406 matches the receiving node's locally stored key counter value. Thus, the verification of the message may be performed by the receiving node via the use of the session key that was generated from the key counter value derived from the CNT 406, which is used to decrypt contents of the secured message to derive and verify an ICV, as discussed in further detail below.

However, if the receiving node's locally stored key counter value is less than the key counter value derived from CNT 406, this means that the locally stored key counter value is out of date, and the receiving node executes a re-keying process to update the locally stored key counter value by overwriting the current key counter value with a new key counter value that matches the key counter value represented by CNT 406. Additionally, for the session keys associated with the current secure zone (as indicated via the SCI), upon verifying the validity of the counter value via the ICV check process described above, the receiving node generates an updated session key from the updated key counter value and overwrites its previously stored session key with the updated one, which should now match the session key used by the transmitting node to generate the secured message.

**In** other words, the processing circuitry 208.2 of the receiving node is configured to update the locally stored key counter value to match the computed key counter value derived from CNT 406 when the locally stored key counter value is less than the locally stored key counter value, but to not update the locally stored key counter value when the two key counter values already match one another. Thus, and as further discussed below, validating the key counter value represented by CNT 406 may comprise verifying the secured message based upon processing one or more fields of the secured message. This may comprise, for instance, using either a currently stored session key or generating an updated session key from the corresponding shared key stored in the receiving node's non-volatile memory, as the case may be, and then using the session key (or the updated session key, as the case may be) for secured message verification, as discussed in further detail below.

Furthermore, if the receiving node's locally stored key counter value is determined to be greater than that derived from the CNT 406, then the receiving node may retain its locally stored key counter value as is, conditionally determine that the key counter value represented by CNT 406 is invalid, and conditionally reject the secured message. Thus, the processing circuitry 208.2 of the receiving node is configured to determine that the key counter value represented by the CNT 406 is invalid, and to conditionally reject the secured message when the key counter value that is computed from the CNT 406 is less than the locally stored key counter value, as this is indicative of a replay attack, a stale message, or a corrupted message.

The conditional rejection of the key counter value is discussed further below, and may include, for example, a further determination regarding whether the key counter value derived from the CNT 406 in the secured message is nonetheless within a predetermined time frame, which may alternatively be referred to herein as a "grace period." This grace period may represent, in some embodiments, a predetermined time period (e.g. 500 ms, 1 second, etc.) such that old key counter values are accepted within the grace period. Thus, the grace period may represent an age of the derived key counter value since the last (different) key counter was received. Additionally or alternatively, the grace period may be determined based upon a number of freshness values associated with the derived key counter value. In this way, communication is not interrupted for a specified period of time after a re-keying event has occurred. However, once the grace period has lapsed, messages with old derived key counter values may be rejected, thereby reducing the risk of replay attacks.

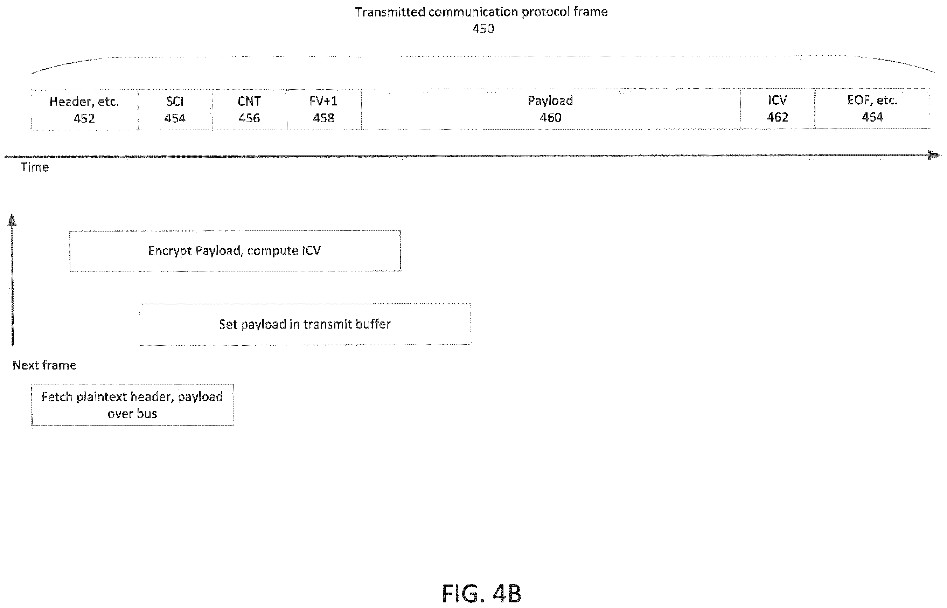

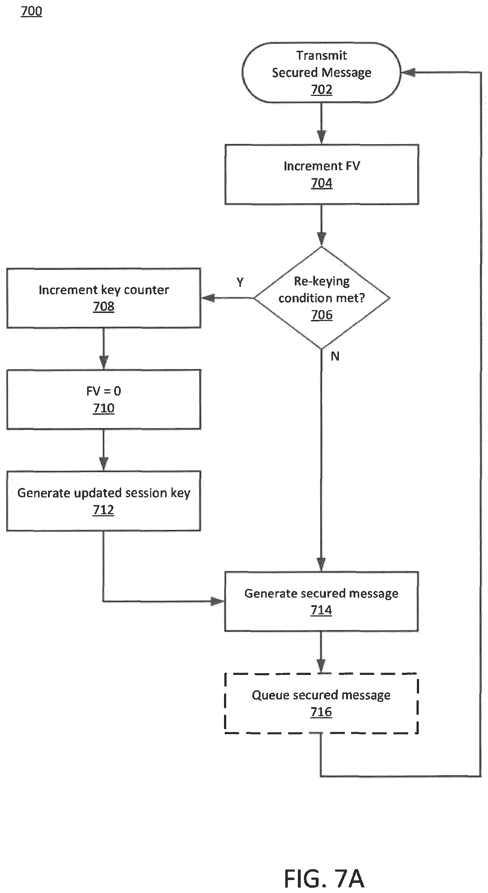

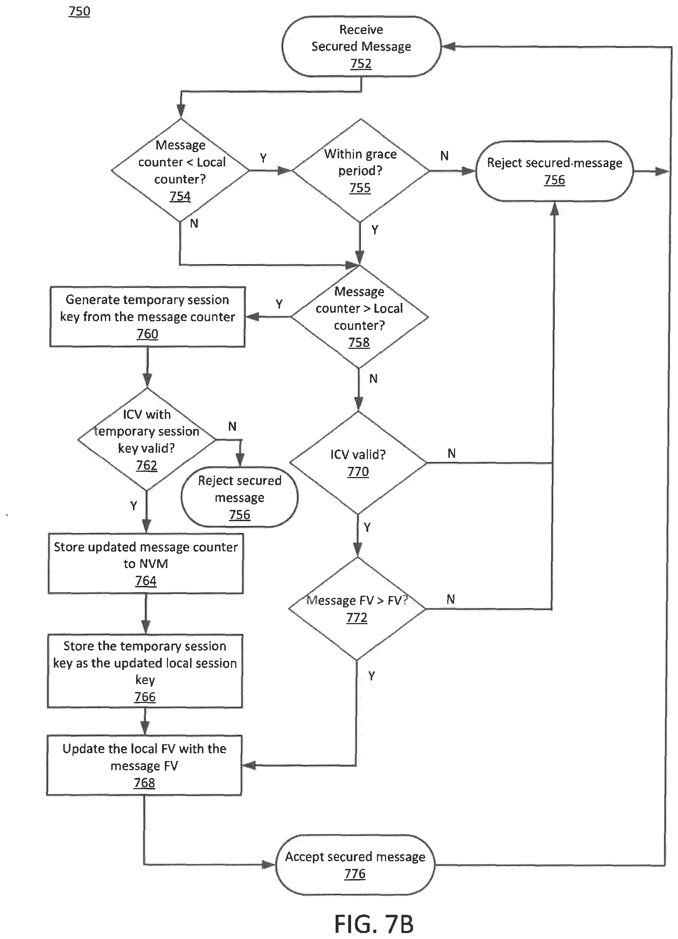

Thus, in each case, the receiving node either accepts or rejects the secured message based upon the determined validity of the key counter value that is computed from the CNT 406. Again, the secured message verification process implemented by the receiving node may utilize additional techniques to perform the key counter value validation to determine whether to accept the message. For example, the secured message may contain a sequence number field, which is shown in FIGs. 4A and 4B as the freshness value (FV) 408. The freshness value may also be included in unencrypted form as part of the secured message, as further discussed herein. The representation of the freshness value, which may alternatively be referred to herein as the FV 408, may comprise the entire freshness value that is used by (and stored by) the transmitting node when generating the secured message or, alternatively, a truncated portion of the freshness value such as a predetermined set of lower significant bits. Thus, a receiving node may, as an added layer of security, verify whether the freshness value in a received secured message matches the freshness value stored in the receiving node's volatile memory (i.e., after the FV is incremented upon receiving the secured message). If not, then the message may be discarded, as the secured message may be part of a replay attack and/or the secured message has been sent out of order. Additional details regarding the use of the freshness values are discussed below with respect to FIGs. 7A and 7B.

The payload 410 may be encrypted via the processing circuitry 2080.2 of the transmitting node using the session key. This encryption process may be performed in accordance with any suitable cryptographic function, including known cryptographic functions. Again, in various scenarios, the secured messages as discussed herein may comprise authentication only messages or may comprise authenticated and encrypted messages. The payload 410 may thus comprise either plaintext that is part of an authentication only message (or be omitted), or alternatively, data that has been encrypted via the transmitting node, i.e. ciphertext.

Moreover, the communication protocol frame 400 comprises a field containing an ICV 412, which is generated by the processing circuitry 208.2 of the transmitting node. The ICV may be computed in accordance with any suitable techniques, including known techniques defined in accordance with any of the communication standards as discussed herein. For example, the ICV may comprise a bit string of a predetermined length, which is computed by the processing circuitry 208.2 based upon any suitable cryptographic function such as e.g. a Cyclic Redundancy Check (CRC) or Hash-based Message Authentication Code (HMAC). The ICV may thus be computed by executing an appropriate cryptographic function, as noted above, using, as inputs, the current key counter value and/or the plaintext of the payload 410. The ICV may comprise data representing a dedicated field or data representing a combination of data from other fields of the secured message 400 as shown in FIG. 4A for example. For instance, the ICV may comprise any suitable combination of the header 402 (including a security tag), the full key counter value represented by CNT 406, the plaintext payload 410 or the ciphertext payload 410, etc.

The ICV 412 may be transmitted as part of the secured message in the clear, although the payload 410 needs to first be decrypted by the receiving node to compute and verify the ICV with the same cryptographic function with which the ICV 412 was generated by the transmitting node. To do so, the receiving node may compute the session key (for that particular secure zone) using the locally stored key counter value corresponding to the computed key counter value derived from the CNT 406. Again, these key counter values (either initially or upon re-keying) should match one another when the key counter value derived from the CNT 406 is valid. In other words, and as noted above, the receiving node's stored key counter value may already match that used by the transmitting node, or may be updated to match that used by the transmitting node via the receiving node performing a re-keying process to update its key counter value, as the case may be.

In any event, once the receiving node generates a temporary session key from the key counter value computed from the CNT 406, this should match the session key used by the transmitting node to generate the secured message prior to being received at the receiving node. This generated session key should also match the locally stored session key at the receiving node assuming that the key counter value used by the transmitting node to generate the secured message generated is the same as that stored locally in the receiving node. That is, because the same KDF, key counter value, and shared key are used by the transmitting node and receiving node, this will yield identical session keys being output in each case. The receiving node may then use the generated temporary session key to decrypt the payload 410, and utilize the same cryptographic function as that used by the transmitting node to compute the ICV. The receiving node may thus compare the ICV computed in this way to the ICV 412 to determine that the computed key counter value derived from the CNT 406 is valid, and to thereby verify the secured message when the ICVs match, and thus accept the secured message. The receiving node may reject the message when the ICVs do not match, as the secured message is not verified, and thus the key counter value is not validated.

FIG. 4B illustrates another secured message format and accompanying processing timeline, in accordance with one or more embodiments of the disclosure. The secured message format as shown in FIG. 4B is identical to that shown in FIG. 4A with respect to the message format and fields. Thus, each of the fields 452, 454, 456, 458, 460, 462, and 464 may be identified with the same analogous fields 402, 404, 406, 408, 410, 412, and 414 of the secured message as shown in FIG. 4A. However, the secured message format as shown in FIG. 4B may be identified with a subsequent secured message that is transmitted by the receiving node as discussed above after receiving the secured message as shown in FIG. 4A. Thus, upon receiving and accepting the secured message as shown in FIG. 4A, the receiving node may store the freshness value (or a portion thereof) in its volatile memory, as discussed above and with respect to FIG. 2C. The receiving node may then increment this freshness value when transmitting a subsequent message and store this incremented freshness value in its volatile memory as well, as shown in FIG. 2A. This is illustrated in FIG. 4B by way of the FV+1 field 458.

Thus, the receiving node may become a transmitting node and transmit the secured message as shown in FIG. 4B. To do so, the (now) transmitting node may access from its volatile memory a session key in accordance with the current key counter value and secure zone corresponding to the recipient node(s) of the transmitted secured message. As part of this process, the transmitting node may compute the ICV and encrypt the payload to generate the payload 460. The transmitting node also computes the current SCI based upon the secure zone of the recipient node(s) of the secured message, as well as the counter value representation CNT 456, which is based upon the current key counter value used to compute the session key for that particular secure zone, as discussed above. Once the information for each of these fields is computed, the transmitting node then assembles and transmits the secured message, as discussed above, with the process being repeated as needed for each of the receiving nodes in the system 300.

### E. Hardware Implementation Examples

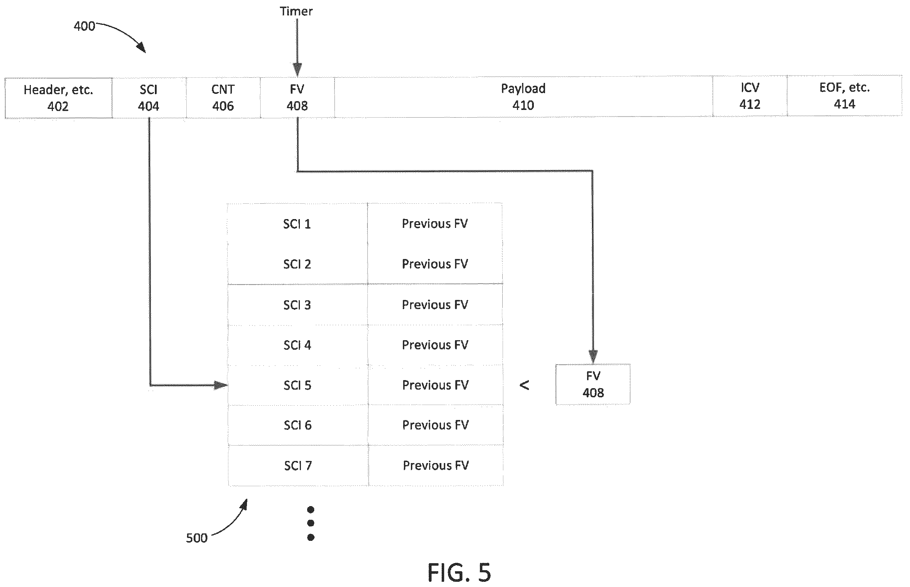

FIG. 5 illustrates the use of a hardware-based solution for utilizing freshness values, in accordance with one or more embodiments of the disclosure. FIG. 5 shows the communication protocol frame 400 from FIG. 4A, which includes a plurality of fields. The communication protocol frame 400 is identified with a secured message generated via a transmitting node. It is noted that if the freshness values are generated as noted above via a software-based approach, the transmitting node may re-order secured messages, which are then received out of order by each of the receiving nodes. Although the window of acceptance with respect to replay attacks may allow for receiving nodes to accept such messages, the use of a software-based approach consumes considerable processing overhead.

Thus, the solution described with respect to FIG. 5 enables a transmitting node to alternatively generate the secured messages "on the fly," as opposed to being buffered and reordered, which is the conventional manner in which secured messages are transmitted. To do so, the transmitting node may implement any suitable type of timer mechanism. For example, each transmitting node may utilize a timer that references a tick time that represents a predetermined timer value, such as 10 microseconds, 5 microseconds, etc. Thus, the freshness value may still represent a string of bits, but these bits may comprise a binary representation of a number of "ticks," with each tick corresponding to a predetermined tick time. This obviates the need for the transmitting node to store the freshness values for each secured message that is transmitted, as shown in FIG. 2A, assuming that the timer ticks faster than the message transmission time. In this regard it is noted that a freshness value in any event should not be re-used for two messages. Thus, the freshness value as discussed herein may be implemented generally as any suitable type of monotonically increasing counter, and as discussed with respect to FIG. 5 may comprise for example a tick timer, a single sequence number counter, etc.

The use of the timestamp for the FV may advantageously support a system in which secured messages are not re-ordered by the buffering scheme at the transmitting node, and therefore the transmitting node only needs one secure channel. This may be the case, for example, when secured messages are generated upon their transmission (i.e. done in hardware linked to a communications protocol engine). This reduces the storage and processing overhead associated with multiple secure channels. In this way, the hardware-based solution allows for a simplification of the SCI to a single, fixed channel on the transmitting node side, as the use of the timestamp ensures that the FV is always increasing per secured message.

Thus, for the hardware-based solution as shown in FIG. 5, the transmitting node may utilize a fixed SCI value that corresponds to a unique device address for that particular transmitting node. This SCI value is thus unique across the system 300. As a result of this modification, the receiving node may additionally or alternatively store, in its non-volatile memory 204 and/or the volatile memory 206 as shown in FIG. 2C, data as shown in the table 500. For example, the table 500 represents a mapping of SCI values (i.e., unique transmitting node addresses) to previously transmitted freshness values (i.e. timestamps). The table 500 may be stored in the form of a lookup table to facilitate such a hardware based solution. The table 500 may include a unique SCI value corresponding to each transmitting node from which the receiving node is configured to receive secured messages, with 7 being shown in FIG. 5 for purposes of brevity, as the table 500 may store any suitable number of SCI and FV values for received encoded messages based upon the particular application.

The receiving node may thus implement a hardware-based solution (e.g., via processing circuitry 208.2) that is configured to scan the data entries in the table 500 until a matching SCI value is found for the SCI 404. For this table entry (i.e., SCI 5 in this example), the table should contain a previous freshness value that is less than the current FV 408. If the FV 408 is less than the corresponding previous FV in the table 500 for SCI 5, then the receiving node may reject the message as it is likely to be a replay attack. It is noted that if the table is not large enough store the requisite number of entries, then further matching may be offloaded for software management (e.g., using a hash table).

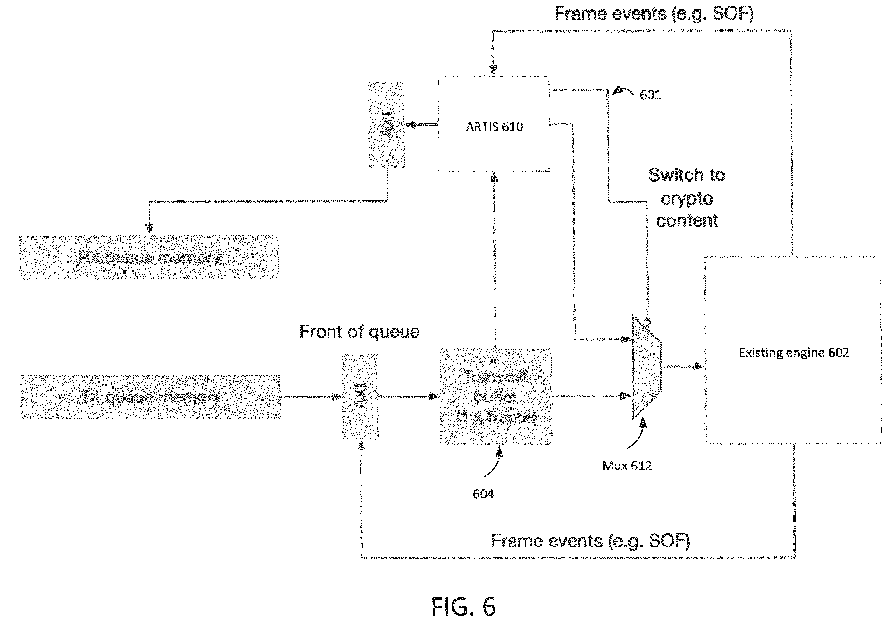

FIG. 6 illustrates another hardware-based implementation for adapting the secured messaging system with an existing conventional system, in accordance with one or more embodiments of the present disclosure. The architecture 600 as shown in FIG. 6 demonstrates that the embodiments as described herein are protocol agnostic. That is, the use of the counter value representations within secured messages and the session keys as discussed herein may be implemented independently of an existing architecture and communication protocol. For example, the architecture 600 comprises an existing engine 602, which may comprise any suitable type of conventional communication engine for use with a real-time control system. Some examples of the existing engine 602 may comprise a CANbus engine, an Ethernet protocol engine, etc., as well as any of the communication protocols as discussed herein. Although a single engine is shown in FIG. 6, the architecture 600 may comprise any suitable number of different engines concurrently, e.g. a CANbus engine and an Ethernet engine.

The architecture 600 is implemented an Advanced eXtensible Interface (AXI) bus architecture by way of example, and also comprises TX and RX plaintext queue memories for buffering transmitted messages that are communicated within the particular system in which the existing engine 602 is implemented. Conventionally, the existing engine 602 controls the AXI coupled to the TX queue memory and the transmit buffer 604. Thus, the existing engine 602 is configured to receive messages from the transmit buffer 604 and to transmit these messages with an unencrypted payload in accordance with any suitable communication protocol, such as those discussed herein for example. Moreover, the existing engine 602 is typically coupled to the AXI and the RX queue memory directly, and thus the existing engine 602 may provide received messages with unencrypted payloads to the RX queue memory for delivery to other nodes in the system.

However, the architecture 600 additionally comprises an accelerated real-time security (ARTIS) engine 610, as well as a multiplexer 612. The ARTIS 610 may be implemented as any suitable dedicated hardware components such as a microcontroller, an application specific integrated circuit (ASIC), a field programmable gate array (FPGA), a system on a chip (SoC), dedicated logic and/or other circuitry, etc. The ARTIS engine 610 is configured to perform any or the functions as discussed herein with respect to the transmitting and receiving nodes, such as e.g. reading the key counter value representation contained in the secure messages, deriving the required session keys, performing encryption, authentication, and decryption, etc. The ARTIS 610 may advantageously be implemented in hardware versus software to eliminate the need for reordering secured messages and to thus minimize latency. This advantageously reduces the window for replay attacks to such a small time period that the risk for replay attacks is essentially eliminated.

The architecture 600 also comprises a multiplexer 612, which is controlled by the ARTIS engine 610 via the control signal 601. Thus, the ARTIS control engine 610 is configured to dynamically change the operation of the system in which it is implemented (e.g. system 300) between an unsecured and a secured messaging operation. For example, the lower path of the mux 612 may be selected to route plaintext data from the transmit buffer 604 to the existing engine 602, and the ARTIS engine 610 may also route the received plaintext data to the RX queue memory in this mode of operation.

However, the upper path of the mux 612 may be selected when operating in a cryptographic mode. In this mode, the plaintext messages are routed from the transmit buffer to the ARTIS engine 610, and are used by the ARTIS engine 610 to generate encrypted payloads that are included as part of the secured messages, as discussed herein. In this mode of operation, the secured messages are also routed to the RX queue memory and distributed to other receiving nodes in the system, but as secured messages (versus unsecured messages that are generated by the existing engine 602). In this way, the architecture 600 allows for concurrent operation of an existing, unsecured messaging system with the secured messaging system embodiments as discussed herein.

### F. Example Process Flows

FIGs. 7A and 7B illustrate process flows used by transmitting and receiving nodes to transmit and receive secured encoded message, in accordance with one or more embodiments of the present disclosure. With reference to FIGs. 7A and 7B, the process flows may comprise a method executed by and/or otherwise associated with any suitable number and/or type of components such as one or more processors (processing circuitry), hardware components, executed instructions (e.g., software components) or combinations of these. The components may be associated with one or more components of the node 200 as discussed herein. The flows 700, 750 may include alternate or additional blocks that are not shown in FIGs. 7A and 7B for purposes of brevity, and may be performed in a different order than shown. Moreover, some blocks may be optional.

Specifically, FIG. 7A provides additional detail regarding the process implemented by a transmitting node upon generating and transmitting a secured message. FIG. 7B provides additional detail regarding the process implemented by a receiving node to validate key counter values in a received secured message to accept or reject the secured message.

Referring first to FIG. 7A, the process flow 700 may be implemented via any one of the nodes discussed herein, such as any of the nodes included in the system 300 for example, when performing a secured message transmission. This may include, for example, the node 200 as discussed herein with respect to FIG. 2A.

The process flow 700 begins with the transmission (block 702) of a secured message. The secured message may be formatted in accordance with any suitable communication protocol and include any suitable number of fields, such as the communication frames as discussed herein with respect to FIGs. 4A-4B.

Upon transmitting the secured message, the process flow 700 includes incrementing (block 704) the freshness value via the transmitting node. This may include, for example, the processing circuitry 208.2 incrementing the locally stored freshness value (e.g., FV.A, FV.B, FV.C, etc.) based upon the particular secure zone corresponding to the intended recipient node(s), as shown in FIG. 2A. Thus, the freshness value that is incremented in this way may be correlated to one or more session keys for that particular secure zone, as discussed herein.

The process flow 700 further comprises the transmitting node determining (block 706) whether a re-keying condition has been met. These conditions may include any suitable predetermined conditions that, when met, result in the key counter being incremented, as further discussed herein, assuming that a priority flag, if implemented, is not set. Such conditions may comprise, for example, a number of secured messages being transmitted with a respective session key in excess of a predetermined number of messages, the expiration of a predetermined time period, each system boot, receiving a security alert request, etc.

As one illustrative example regarding session key exhaustion, the determination regarding whether the number of transmitted secured with a respective session key has exceeded a predetermined number of messages may include determining (block 706) whether the current (now incremented) freshness value exceeds a predetermined threshold value. This predetermined threshold value may be selected as any suitable value that triggers a re-keying process due to session key exhaustion, as discussed herein. For example, the threshold freshness value may be several million or several billion.

Thus, if a re-keying condition is met (e.g., the incremented freshness value exceeds the predetermined threshold), then the transmitting node executes (block 708) a local re-keying process of the key counter values. Thus, using the secured zone A from above as an example, which is assumed to be used for the current secured message transmission, this may include the session key generator 202 incrementing (block 708) the key counter A.1 and overwriting the NVM 204 with this new updated key counter value (e.g., a key counter A.1+1, not shown). Moreover, when a re-keying event occurs, the transmitting node may reset its locally stored freshness value, which is transmitted in the next secured message, to its predetermined or default value (e.g. 1), which is then incremented for subsequently transmitted messages as noted herein.

The process flow 700 also comprises resetting (block 710) the freshness value for the secured zone back to a default or initial value, which is 0 in this example. Thus, continuing the previous example, the freshness value FV.A would be reset to 0 (or other suitable initial value).

The process flow 700 further comprises generating (block 712) an updated session key from the incremented key counter value. This may comprise, using the secured zone A as an example, the session key generator 202 computing the session key A.2 from the shared key A and incremented key counter value in accordance with the KDF, as shown in FIG. 2B. The previous session key A.1 as shown in FIG. 2A may then be overwritten with the updated session key A.2 or otherwise invalidated for future secured transmissions. For example, the updated session key A.2 may be stored in the volatile memory 206 in a new location or overwriting the contents of session key A.1.

The process flow 700 may comprise generating (block 714) a secured message. This may include, for example, the processing circuitry 208.2 generating a secured message as discussed herein having any suitable number of fields. The secured message may be generated in this manner using either the original session key (e.g., session key A.1) if the freshness value was determined (block 706) to be less than the threshold value or, alternatively, the updated session key (e.g. session key A.2) may be used when the freshness value was determined (block 706) to be greater than the threshold value, and thus the key counter and session key were updated. In any event, the secured message may be generated using the current session key to encrypt the payload of the secured message, to transmit the secured message as an authentication only message, or to transmit the secured message as both an authentication and encrypted message. Again, the session key may be one of several (e.g. one being used for authentication and another being used for encryption). In such a case, the process flow may 700 may be extended to selectively update any suitable number of session keys corresponding to the same freshness value.

The process flow 700 may comprise queuing (block 716) the generated secured message. This may include, for example, the communication circuitry 208.1 adding the secured message to a queuing buffer for transmission (block 702) in the appropriate order based upon a messaging priority. Alternatively, if a hardware-based solution is implemented as discussed above with respect to FIG. 5, then the use of a queuing buffer may not be needed, and the secured message may be transmitted (block 702) upon being generated (block 714). The process flow 700 may thus be repeated for each secured message transmission via a transmitting node, with the process flow 700 applying to each subsequent secured message transmission.

Referring now to FIG. 7B, the process flow 750 may be implemented via any one of the nodes discussed herein, such as any of the nodes included in the system 300 for example, when receiving a secured message transmission. This may include, for example, the node 200 as discussed herein with respect to FIG. 2A, when functioning as a receiving node.

The process flow 750 begins with receiving (block 752) a secured message. Again, the secured message may be formatted in accordance with any suitable communication protocol and include any suitable number of fields, such as the communication frames as discussed herein with respect to FIGs. 4A-4B.

The process flow 750 further comprises determining (block 754) whether the message counter, e.g. the key counter value represented by the CNT 406 as discussed herein, is less than the locally stored key counter value corresponding to the secured zone to which the secured message was sent and received. This determination may comprise, for example, comparing the representation of the key counter value encoded by the CNT 406 with the locally stored key counter value for the same secured zone. For instance, the CNT 406 may represent a predetermined number of least significant bits of the key counter value used to generate the encoded message by the transmitting node prior to being received. In such a case, then the determination (block 754) may comprise a comparison via the processing circuitry 208.2 between the same corresponding predetermined number of least significant bits of the locally stored key counter value for the current secure zone. Alternatively, if the entire key counter value is represented by the CNT 406, then the determination (block 754) may comprise a comparison via the processing circuitry 208.2 between the entire locally stored key counter value and the entire key counter value represented by CNT 406 for the current secure zone.

In any event, if it is determined that the key counter value derived from the CNT 406 is less than the locally stored key counter value for that secure zone, then the process flow 750 comprises conditionally approving or rejecting the derived key counter value. For example, the process flow 750 comprises a further determination of whether (block 755) the key counter value derived from the CNT 406 is within the predetermined grace period, as noted above. Again, this grace period may represent a time period that has elapsed since the last, different key counter value was received, and may additionally or alternatively be computed based upon the based upon the freshness values associated with the key counter value derived from the CNT 406.

If the key counter value derived from the CNT 406 is outside of this grace period, then the process flow comprises rejecting (block 756) the secured message. That is, in such a case, the receiving node determines that the key counter value represented by the CNT 406 is invalid, and thus rejects the secured message, as this is indicative of a replay attack, a stale message, or a corrupted message.

In the event that the key counter value derived from the CNT 406 is within the grace period (block 755, Y) or the key counter value derived from the CNT 406 is not less than the locally stored key counter value for that secure zone (block 754, N), the process flow 750 continues and comprises another determination (block 758) regarding whether the opposite condition is true, i.e. the key counter value derived from the CNT 406 is greater than the locally stored key counter value for that secure zone. If this is not the case, then this means that the key counter value derived from the CNT 406 matches the locally stored key counter value for that secure zone, and the process flow 750 proceeds accordingly.

However, in the event that the value derived from the CNT 406 is greater than the locally stored key counter value for that secure zone, then the locally stored key counter value is out of date, as noted above. As a result, the leftmost branch of the process flow 750 corresponds to a conditional local (i.e., at the receiving node) re-keying process. That is, the receiving node may update its locally stored key counter value in such a case only when the key counter value that is represented in the CNT 406 is determined to be valid via an additional message verification process.

For example, upon the receiving node determining (block 758, Y) that the locally stored key counter value is out of date, the process flow 750 comprises generating (block 760) a temporary session key. To do so, the receiving node uses the full length key counter value that was used by the transmitting node to generate the secured message that has been received. Thus, in the event that the CNT 406 represents a truncated portion of the full length key counter value used by the transmitting node to generate the secured message, the receiving node may derive the full length of the key counter value via a computational process. For instance, the receiving node (e.g., the processing circuitry 208.2) may concatenate the non-truncated portion (e.g., the upper significant bits) of the locally stored key counter value with the remaining truncated portion of the full length of the key counter value (e.g. the lower significant bits) represented by the CNT 406.

Once the full length of the key counter value is derived from the CNT 406, the process of generating (block 760) the temporary session key is identical to that used to generate the locally stored session key by both the receiving node and the transmitting node. Thus, the receiving node uses the same KDF and other inputs that were (or should have been) used by the transmitting node to generate the temporary session key. Specifically, the full key counter value is used as one of the inputs to the KDF together with the receiving node's locally stored shared key that corresponds to the current secure zone.

In this way, the full length of the key counter value computed in this manner may be validated by using the temporary session key to decrypt the payload of the secured message, compute the ICV value, and then compare the computed ICV value with the ICV 412 contained in the secure message. Thus, the ICVs will only match (block 762, Y) when the key counter value used to generate the secured message is valid. If not (block 762, N), then the process flow 750 comprises the receiving node rejecting (block 756) the secured message.

Therefore, when the ICVs match one another, the receiving node stores (block 764) an updated key counter value in the NVM 204, overwriting the current key counter value such that the locally stored key counter value now matches the valid, full length the key counter value that was derived from the CNT 406. Again, this key counter value was used by the transmitting node to generate the session key and, in turn, used to generate the current secured message. For example, if the receiving node previously stored the key counter A.1 as shown in FIG. 2A, then after this process the receiving node and the transmitting node would both store the key counter A.1+1.

Additionally, the process flow 750 comprises storing (block 766) the temporary session key that was generated (block 760) from the full length key counter value derived from the CNT 406 as described above as the receiving node's updated local session key. For example, if the receiving node previously stored the session key A.1 as shown in FIG. 2A, then after this process the receiving node and the transmitting node would both store the session key A.2, which is generated using the key counter A.1+1, as shown in FIG. 2B.

The process flow 750 further comprises updating (block 768) the local freshness value to match that received in the secure message. For example, if the receiving node previously stored the freshness value FV.A as shown in FIG. 2A, then after this process the receiving node and the transmitting node would both store the freshness value FV.A+1. Additionally, the receiving node may update the received FV log 206.1 as shown in FIG. 2C to store the FV from the secured message A.2 correlated with the key counter value and secure zone, as noted above.

The process flow 750 further comprises accepting the secured message as the final step in the process, as the key counter value has been validated and the freshness value updated as a result of the local re-keying process.

As noted above, when the receiving node determines (block 758, N) that the key counter value derived from the CNT 406 matches the locally stored key counter value for that secure zone, then the process flow 750 proceeds accordingly. This includes the validation of the key counter value derived from the CNT 406 based upon a comparison of ICVs. Specifically, the receiving node may generate the session key from the key counter value derived from the CNT 406 or, alternatively, use the locally stored session key to decrypt the payload contents, compute the ICV, and then determine (block 770) whether the ICVs match one another. Again, if not, then the secured message is rejected.

Otherwise, the process flow continues to determine (block 772) whether the freshness value contained in the secured message is greater than the locally stored freshness value for the transmitting node and the secure zone, e.g. as shown in the log of FVs in FIG. 2C. If so, then the receiving node rejects the secured message. If not, then the process flow includes updating (block 768) the locally stored FV with the FV contained in the secured message, as discussed above, and accepting (block 776) the secured message. The process flow 750 may thus be repeated for each secured message that is received via a receiving node, with the process flow 750 applying to each subsequent secured message that is received.

### II. Secure channel multiplexing

Again, the various nodes as discussed in Section I, which may include the node 200 operating as a transmitting or a receiving node for instance, may form part of any suitable network of interconnected nodes, which may comprise for instance an in-vehicle network (IVN). This network may comprise, for instance, an Ethernet network, or a combination of an Ethernet network and other networks, such as the CAN bus network for instance. Thus, the nodes as described herein may comprise IVN endpoints, together with any other suitable number and/or type of IVN endpoints that make up any suitable type of real-time control system. For Ethernet implementations, such as 10BASE-T1S or 10BASE-T1L, for example, such IVN endpoints may interface with one another using Ethernet communication protocols, and thus utilize the MACsec standard for security. The MACsec standard is also known as the Institute of Electrical and Electronics Engineers (IEEE) 802.1AE standard, which is standardized by the IEEE 802.1 working group standard as of this writing. The MACsec standard comprises a network security standard that operates at the medium access control (MAC) layer and defines connectionless data confidentiality and integrity for media access independent protocols.

Thus, it is noted that MACsec represents the "data plane" security for Ethernet, and uses strong AES-GCM encryption for authentication and (optionally) encryption. Additionally, the current Ethernet standard MKA (MACsec Key Agreement) protocol is conventionally leveraged as one of the "control plane" solutions for MACsec. Thus, MKA represents the IT industry solution for setting pre-shared temporary "session" keys, but is not suitable for real-time control systems with many endpoints (e.g. as part of a multidrop system), as noted above in Section I. Therefore, the embodiments as described in Section I are directed to an alternative control plane security solution that is well-suited to the demands of real-time control systems. The alternative control plane security solutions as discussed in Section I above may be referred to herein as in line key agreement (IKA) security, and leverages a key derivation function (KDF) to derive a session key using a key counter value, which is alternatively referred to in Section II as a key number or a key number value. As discussed above in Section I, this key number is then stored in a memory (e.g. the non-volatile memory 204 as shown in FIG. 2A) and changed by consensus among nodes. Thus, the IKA control plane solutions as discussed in Section I above may leverage various portions of the Ethernet-based MACsec protocol while eliminating the need for dedicated key agreement messages to be exchanged via a central key server.

However, conventional applications utilizing MACsec are typically point-to-point, and therefore only require a few secure channels, for instance one for the transmit direction and one for the receive direction. Hardware-based MACsec thus fails to support the number of secure channels that are used for real-time control systems, which often utilize multi-drop architectures, four or more secure channels, and several nodes (e.g. 20 or more). As an illustrative example, an in-vehicle E/E architecture implemented for a real-time control system may implement four secure channels per node and include 20 nodes. As a result, such a real-time control system would need to support 80 receive secure channels, which is significantly greater than the typical two channel use case for point-to-point MACsec applications.

The embodiments as discussed in further detail in this Section extend the embodiments discussed in Section I by further leveraging the IKA control plane security solutions with data plane MACsec security. For example, the IKA control plane solutions as discussed in Section I and in this Section may be executed before the MACsec data plane security protocols. In doing so, the embodiments as described in this Section may utilize in-line key agreement with synchronized key numbers among nodes to enable a sharing of secured channels between nodes. Thus, the embodiments presented in this Section ensure that the secure channel support for MACsec may be scaled up to support MACsec implementations for real-time control systems having a larger number of nodes and secure channels.

To this end, it is noted that real-time control systems often implement a transmission scheduling system for transmitting secured messages, and also utilize multiple secure channels to do so. For instance, each node may store several messages in a transmission queue, with each queue position representing future transmissions of secured messages. The transmission queue may include several buffers or allocated memory per secure channel, and each secure channel may correspond, for instance, to a different level of prioritization. In this way, some secure channels are reserved for the transmission of higher priority secured messages, and thus sent earlier than other, lower priority secured messages that are associated with other, lower priority secure channels. However, the use of multiple secure channels in this way requires multiple pre-shared session keys be stored on each node, i.e. one per secure channel, and multiple sets of such pre-shared session keys also be stored for each other node from which a node is expected to receive secured messages. Given the significant number of other nodes that may use secure channels, the number of pre-shared session keys that need to be stored locally per node may become significant, requiring (for each node) a memory storage solution with adequate capacity to accommodate these pre-shared session keys, adding to their cost.

The embodiments described in this Section address these issues and allow for the use of scaled solutions for leveraging the IKA control plane security solutions discussed in Section I to use an on-the-fly secure channel and pre-shared session key generation technique. Doing so allows for secure channel multiplexing and, as a result, the use of a single pre-shared temporary session key per each secured message that is transmitted or received. It is also noted that the embodiments as discussed herein may be implemented in accordance with any suitable communication protocol, although it may be particularly useful to implement the embodiments described herein in accordance with an Ethernet protocol, such as the 10BASE-T1S or the 10BASE-T1L Ethernet protocols, for instance, although this is provided by way of example and not limitation. Again, when an Ethernet-based standard is implemented, the embodiments as described in this Section may leverage any suitable portions of the Media Access Control security (MACsec) protocol to perform any of the processes as further described herein.

Additionally, it is noted that in Section I the IKA control plane solutions may be implemented in accordance with any other suitable communication protocols, such as CAN, CAN FD, CAN XL, etc. Thus, some of the embodiments as described in Section I, such as the re-keying of the key counter values for example, may leverage specific fields or values that are specific to such protocols, and which may not be present in Ethernet-based protocols. As one example, the re-keying conditions that, when met, result in the key counter values being reset to a predetermined value may be performed based upon a threshold number of secured messages being transmitted or received by a node. This may be realized, for instance, by counting the number of secured messages that are transmitted or received using a unique identifier such as the freshness value (FV). However, as the MACsec standard does not implement freshness values, the embodiments as described in this Section may, when Ethernet-based communication protocols are implemented, substitute the use of freshness values with any other suitable unique value per secured message. This may also be used to track the number of secure messages that are transmitted or received, which again may be used to determine whether a re-keying event has occurred. Such alternate unique values may comprise, for instance, a packet number or other suitable field that is unique per secured message transmission. In this way, any of the embodiments as discussed in Section I may also be adapted to the embodiments described in this Section when Ethernet and MACsec are implemented for the communication of secured messages.

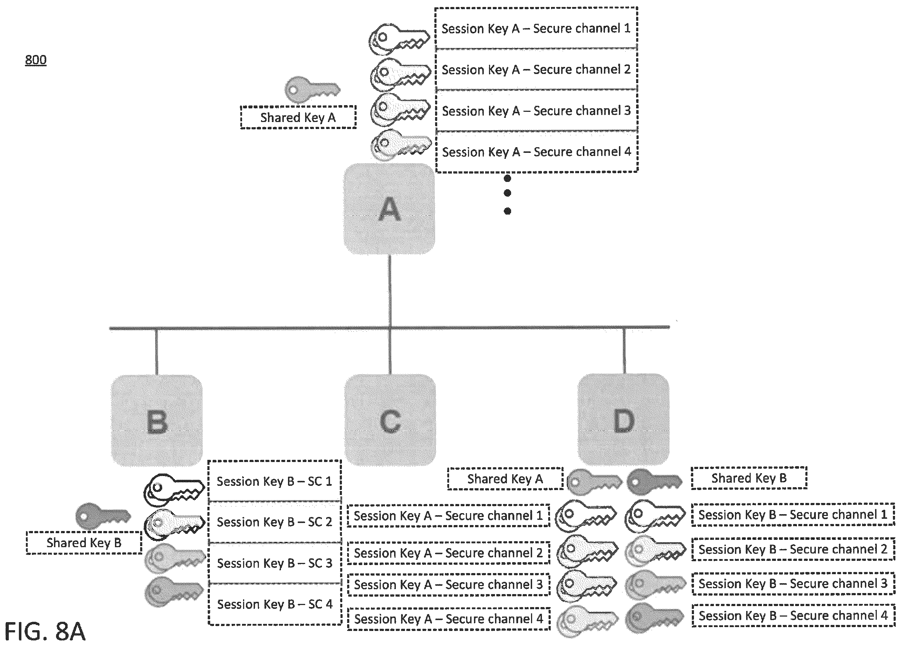

FIG. 8A illustrates a system of interconnected nodes 800 (also referred to herein as simply a system 800), which may include any suitable number of nodes, with four being shown in FIG. 8A for purposes of brevity and identified as the nodes A, B, C, and D. Additionally, the system 800 of interconnected nodes as shown in FIG. 8A may implement any suitable number of secure channels (SCs) to transmit and receive secured messages, with four being shown in FIG. 8A for purposes of brevity. The system 800 as shown in FIG. 8A includes a communication arrangement between the nodes A, B, and D. Specifically, the nodes A and B are configured to transmit secured messages using one of four different secure channels as shown, and thus each of the nodes A and B implements four transmit secure channels. The node D is configured to receive secured messages from each of the nodes A and B via one of the four respective secure channels 1-4, and thus node D implements eight receive secure channels.

In this configuration, the nodes A and B are configured to transmit secured messages to node D. Any of the nodes A-D may be identified, for example, with the node 200, as shown in FIGs. 2A, for example. Additionally, the secure channels, the pre-shared long-term keys (also referred to herein as pre-shared keys, shared secrets, or simply as shared keys), and the pre-shared session keys (also referred to herein as a temporary session key or simply as session keys) may be defined, for example, in accordance with the MACsec protocol. In accordance with such embodiments, the pre-shared long-term keys A, B may be identified with the MACsec-defined pre-shared long-term keys (CAK), the pre-shared session keys may be defined in accordance with the MACsec-defined pre-shared session keys (SAK), and the secure channels may be defined in accordance with the MACsec-defined secure channels (SC).

With respect to the system of interconnected nodes 800, for a conventional system the node D needs to store the shared key A, B (i.e., the pre-shared long-term key) of both nodes A and B, as secured messages will be received from each of these nodes via one of the respective four receive secured channels, and is used to generate the corresponding session keys (i.e. the pre-shared session keys). Thus, the node D needs to store the shared keys A, B (e.g. in a non-volatile memory) to update the session keys over time as updated key numbers (e.g. the key counter values) are received as part of each secured message, as discussed above with respect to Section I. Additionally, the node D needs to store, for each shared key A, B, one session key per receive secure channel, which are derived from the session key of each node A, B, as shown in FIG. 8A. These session keys are thus used by the node D to authenticate or to authenticate and decrypt the content of secured messages received via each respective node and secure channel.

As a result, node D needs to store eight session keys given the number of secure channels and the number of nodes from which secured messages are received via each of these secure channels. The shared keys A, B may be identified, for example, with the shared keys A-M as shown in FIG. 2A, which may be stored in the non-volatile memory 204 of the node 200 for example. The eight session keys A, B for each of the two secured channels may be identified, for example, with the various session keys as discussed above in Section I, which are discussed in further detail below, and may be stored in the volatile memory 206 of the node 200 for example. Thus, FIG. 8A illustrates that the size of the volatile memory 206 needs to have a capacity that accommodates a large number of session keys as the real-time control system scales in size with additional nodes and secure channels. This is due to a node receiving secured messages from a large number of nodes and number of secured channels, which may significantly exceed those shown in FIG. 8A.

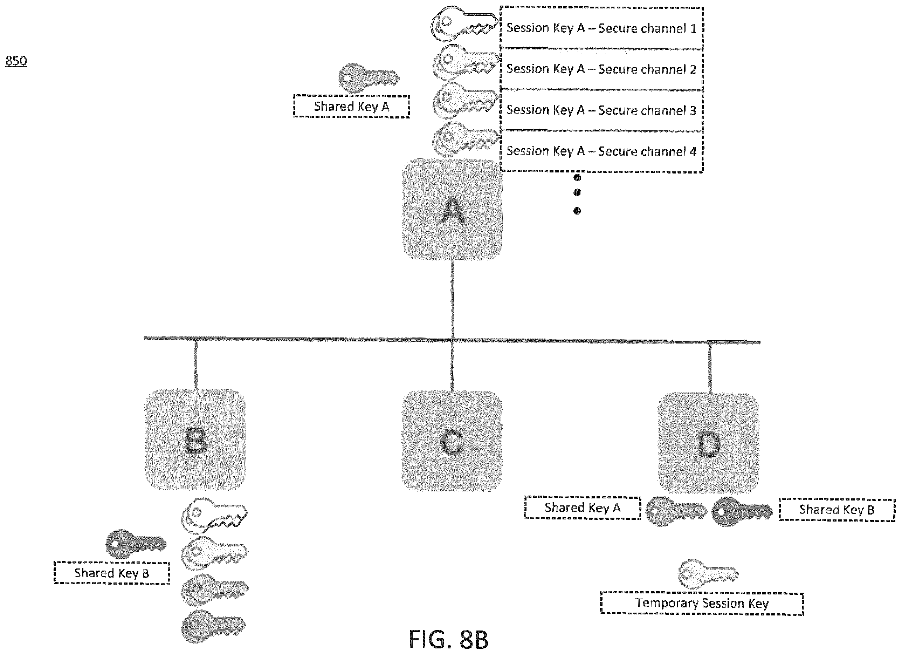

Thus, by multiplexing the secure channels as discussed in greater detail in this Section, the embodiments allow for a significant reduction in the capacity of the memory required to store the session keys, as illustrated with respect to FIG. 8B. For instance, the node D still needs to store the two shared keys A, B for the nodes A and B, but only needs to store a single temporary session key. This temporary session key may be considered equivalent to one of the eight session keys as discussed above with respect to FIG. 8A, but may be selectively updated (e.g. when a subsequent secured message is received or transmitted by the node D), with the previous temporary session key being overwritten.

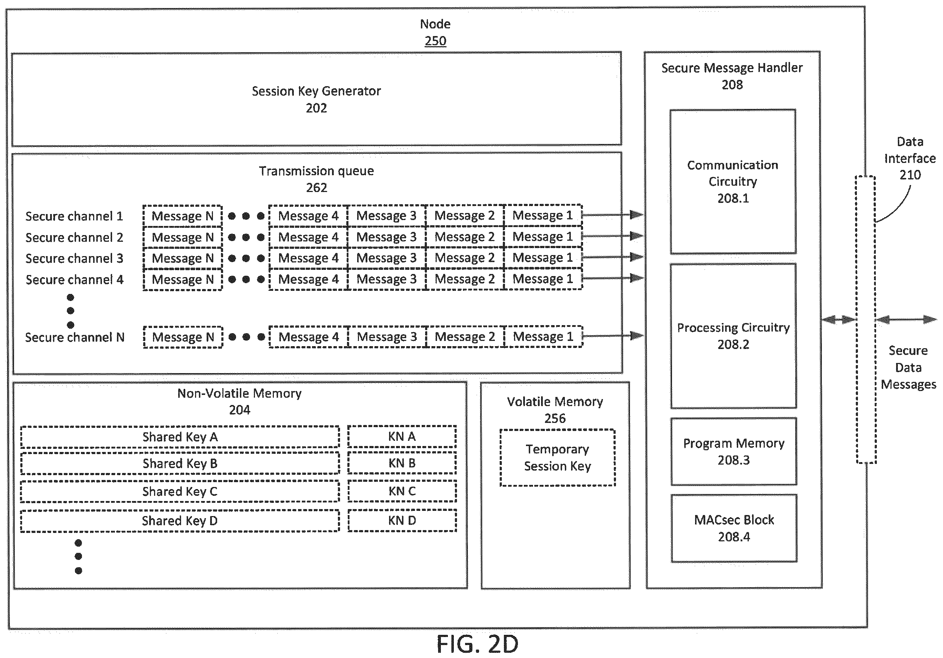

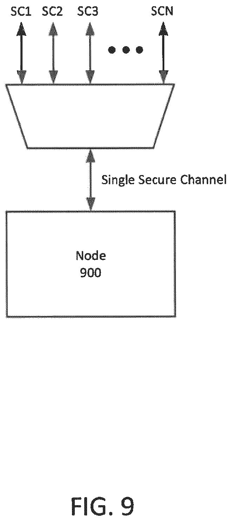

Thus, the embodiments as described in this Section are directed to a secure channel multiplexing technique in which a single secure channel and associated temporary session key may be used. In doing so, a node may transmit and receive secured messages associated with one of several different secure channels using a single secure channel, as depicted functionally in the block diagram of FIG. 9. To this end, the node 900 as shown in FIG. 9 may be identified with the node 250 of FIG. 2D, which is discussed in further detail below.

Therefore, and as further discussed below, the embodiments described in this Section enable the generation of a single temporary session key and the configuration of a single secure channel as secured messages are transmitted and received using any suitable number of secure channels. For instance, a conventional MACsec block may have specific restrictions with respect to the number of secure channels (SC) supported (e.g. 2 or 4). Thus, the secure channel multiplexing techniques described herein may facilitate the re-use of such MACsec blocks in a system (e.g. a real-time control system) that requires a larger number of secure channels, which would otherwise not be realizable without the secure channel multiplexing embodiments described in further detail in this Section.

FIG. 2D illustrates another example node architecture, in accordance with one or more embodiments of the disclosure. The node 250 may operate in the same manner and include similar components as the node 200 as shown in FIG. 2A. Thus, any of the statements of the node 200 as described in Section I are applicable to the node 250 as described in this Section, with differences in their operation, configuration, and/or components being discussed in further detail below. Additionally, although different terms may be used to refer to the embodiments of Section I and Section II, as well as the same embodiments within each Section, the use of alternate terms, when stated, is intended to equate their use and function. For example, Section I describes the use of key counters and key counter values, whereas Section II may describe these key counters as key numbers. The use of either term is considered to refer to the same value.

Additionally, the node 250 may be identified with any suitable type of component, and may represent one node in a system of interconnected nodes, such as any of the nodes A-D as discussed in FIG. 8B or the node 900 as shown in FIG. 9, for example. Again, the node 250 may be identified with part of an electronic control unit (ECU), a sensor, an actuator, a host, etc., and the various nodes with such an interconnected system may differ in type and/or function, although each node may have a common functionality as discussed herein with respect to the node 250. Thus, each node in the system of interconnected nodes may be configured to transmit and/or receive secured messages in the same manner as that described herein with respect to the node 250.

The node 250 as shown in FIG. 2D may represent one node in an interconnected network of nodes. This may comprise a system of interconnected nodes configured to communicate over a bus according to a multi-drop scheme, as discussed herein. Such a multi-drop scheme may, for example, be part of an in-vehicle E/E architecture as discussed above, which may include an Ethernet architecture or other suitable in-vehicle E/E architecture. The system of interconnected nodes may support the communication of secured messages in accordance with any suitable type of control system, such as a real-time control system that may be implemented in a vehicle for example. Thus, the node 250 may be one of any suitable number of nodes that communicate with one another via an interconnected network by transmitting and receiving secured messages via the data interface 210, which may be coupled to and/or form part of a network, bus, etc., that is used as part of any suitable type of point-to-point or multi-drop scheme. Again, the data interface 210 may comprise any suitable number and/or type of data interface(s) to facilitate the exchange of secured messages between the node 200 and any suitable number of other nodes within the system of interconnected nodes.

The node 250 may comprise a session key generator 202, a secure message handler 208, a data interface 210, and a non-volatile memory 204, which may comprise the same components and operate in the same manner as those described above with respect to FIG. 2A having the same reference numbers, excepting for any differences as noted in this Section. Additionally, the node 250 comprises a volatile memory 256, which may be implemented as any suitable type of volatile memory and be configured to operate in the same manner as the volatile memory 206 as described above with respect to FIG. 2A, excepting for any differences as noted in this Section. For example, the volatile memory 256 may have a smaller capacity than the volatile memory 206 of the node 200 as a result of storing fewer session keys at one time, as described in further detail herein.

Any of the data stored in the non-volatile memory 204 and the volatile memory 256 may be additionally or alternatively stored in other memories, which may be part of the node 250 or components external to the node 250. For example, any of the data that is illustrated in the Figures as being stored in a volatile memory 256 may alternatively be stored in a non-volatile memory 204, and vice-versa. However, it is recognized that specific types of static data, such as the shared keys and key numbers, may advantageously be stored in the non-volatile memory 204 to ensure their security. Also, and as noted in Section I above, it may be of interest to assure persistence of static data, such as the shared keys, in the event that a node goes offline and returns to the bus, as may be the case with a reboot of a node. Moreover, it is noted that the shared key and the key number should be stored in a way that persists over power reset cycles. Thus, these may be cached in volatile memory 256 for performance reasons, but updates to the shared key and the key number should then be written back to the non-volatile memory 204.

### A. Transmission Operation

As discussed in the context of a transmitting node, the node 250 may be identified, for instance, with one of the nodes A or B as shown in FIG. 8B, for instance. The node 250 also comprises a transmission queue 262, which may include any suitable arrangement and/or configuration of any suitable type of memory configured to store messages or secured messages prior to transmission, in various embodiments. For example, the transmission queue 262 may comprise a set of data banks, which may comprise any suitable type of storage such as buffers (e.g. first-in-first-out (FIFO) buffers), a configuration of addresses of a memory, etc. The transmission queue 262 is not shown in the node 200 of FIG. 2A for purposes of brevity, but may nonetheless also be a part of the node 200.

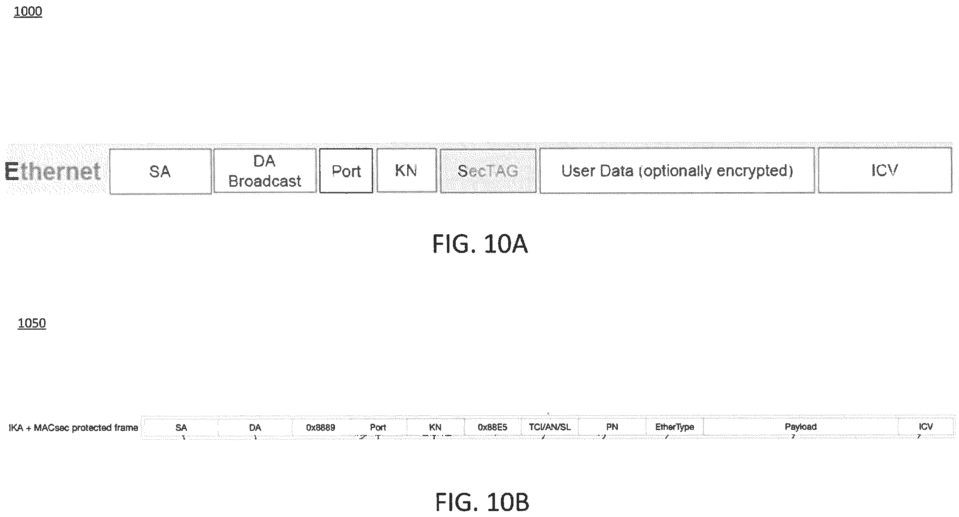

In an embodiment, secured messages may be stored in the transmission slots of the transmission queue 262 prior to their transmission. That is, the secured messages stored in the transmission queue 262 may be the same as those that are subsequently transmitted via the communication circuitry 202.1 to the network using the data interface 210. This means that the secured messages may be generated and stored from corresponding messages that are generated via the processing circuitry 208.2 or other suitable components of the node 250. The initial, unsecured messages generated in this manner may include for example a payload (e.g. if authentication and encryption are to be performed) or other suitable information such as any of the fields of the secured message to be transmitted, which may comprise a communication frame as discussed in further detail with respect to FIGs. 10A and 10B. The unsecured message (otherwise referred to herein simply as a message) is then converted to the secured message stored in the transmission queue 262 using the temporary session key as discussed herein.

However, it is noted that the generation and storage of the secured messages in this manner, i.e. in advance of their transmission, may complicate the use of time-sensitive features. For instance, a synchronization mechanism may be needed by nodes receiving the secured messages, as the key numbers used to generate the temporary session key for each stored secured message needs to be identified by each receiving node. As further discussed below, this is so the receiving node may generate the same temporary session key, which is then used to authenticate or authenticate and decrypt the secured messages. This may be achieved, for example, via the use of a synchronization mechanism that enables the nodes in the interconnected network to correlate each secured message with its locally stored key number. For instance, a receiving node may correlate a received key number with a locally stored one (for each secure channel), as further discussed herein, and then trigger an update of the key number (and the temporary session key) when needed. This updated key number may then be used for the generation of the temporary session key to generate and transmit secured messages via the receiving node.

In another embodiment, the messages stored in the transmission queue 262 comprise unsecured messages, which are generated and stored prior to their conversion to secured messages and the subsequent transmission of these secured messages as discussed herein. This may include, for instance, one or more fields of a communication frame as further discussed herein, such as the payload for example. In accordance with this embodiment, the secured messages are generated as they are transmitted using the content of the unsecured messages stored in the transmission queue 262. Therefore, it may be particularly useful to implement this embodiment to simplify the synchronization of the key numbers among the different interconnected nodes, as discussed above with respect to Section I (e.g. for the equivalent key counters). Thus, this embodiment is the primary focus of this Section and is discussed in further detail herein, although the disclosure is not limited to this specific embodiment.

In any event, each of the data banks as shown in FIG. 2D that form part of the transmission queue 262 may be identified with a different secure channel. The contents of each data bank may be associated with each message to be transmitted via the node 250 as a next scheduled secured message is selected in accordance with any transmission scheme. That is, each secure channel may be identified with a respective data bank, and each data bank may store a number of messages in respective transmission "slots" in an order of their transmission as secured messages for that secure channel. Thus, each transmission slot may be identified with a specific buffer and/or memory address range that stores the content of a secured message that is to be transmitted (after conversion to a secured message).

Thus, using the data banks as shown in FIG. 2D for secure channel 1 as one example, message 1 may be identified with the content of a message for the next secured message to be transmitted for secure channel 1, message 2 as the content of a message for the next message to be transmitted, and so on. In an embodiment, each secure channel may be identified with a different level of message prioritization, with the most urgent secured messages being transmitted using messages stored in the next transmission slot for the data bank for the secure channel 1, less urgent secured messages being transmitted using messages stored in the data bank for next transmission slot associated with the secure channel 2, and so on. Thus, the next secured message that is transmitted using the message contents stored in the transmission queue 262 may comprise the message contents identified with message 1 for any of the secured channels, based for instance on the priority of the secured message to be transmitted.

The transmission of the secured messages in this manner (i.e. using the messages stored in the transmission queue 262) may be performed in accordance with any suitable techniques, including known techniques. For instance, Ethernet standards such as 10BASE-T1S and 10BASE-T1L may define secured message transmission scheduling, and thus the node 250 may perform secured message transmissions in accordance with these or other suitable protocols that define such transmission scheduling schemes. Again, the data banks as shown in FIG. 2D may define different priority classes, and in such a scenario may be defined for example in accordance with the IEEE 802.1Q standard. Continuing this example, each priority class may be assigned its own packet number (PN), and thus a specific secure channel, in accordance with any suitable Ethernet standard.

Again, regardless of how the secured messages are scheduled for transmission, the node 250 may first generate the unsecured messages that are to be secured and then transmitted as the secured messages as discussed herein, with the unsecured messages being stored in their respective transmission slots in the transmission queue 262. Thus, the secure message handler 208 is configured to generate the messages in accordance with any suitable communication protocol, which are then stored in their corresponding transmission slot of the transmission queue 262. For example, the processing circuitry 208.2 may execute instructions stored in the program memory 208.3 to generate an initial message for transmission that is stored in the transmission queue 262 in accordance with any suitable communication protocol, such as the 10BASE-T1S or the 10BASE-T1L communication protocol, for example.

Based upon the order specified by the transmission schedule, the stored messages are then converted to secured messages via the application of the temporary session key as discussed in further detail herein, and then transmitted as secured messages via the communication circuitry 208.1 and data interface 210. The node 250 may thus generate secured messages in this manner by generating the temporary session key for a particular secured channel, shared key, and key number combination, as discussed herein. The temporary session key is then stored in the volatile memory 256 and applied to a stored message in the transmission queue 262 in accordance with any suitable cryptographic techniques to generate the corresponding secured message that is then transmitted.

The messages stored in the transmission slots of the transmission queue 262 may comprise any suitable portion of communication frames that are to be transmitted in accordance with any suitable communication protocol, such as the Ethernet 10BASE-T1S or the 10BASE-T1L communication protocol, for example. The processing circuitry 208.2 may generate the secured messages that are transmitted using the content of the messages stored in the transmission queue 262 via any suitable secure messaging scheme, which may include any suitable authentication only or, alternatively, any suitable authentication and encryption schemes such as any of those discussed above with respect to Section I. As illustrative examples, the processing circuitry 208.2 may implement any of the AES-GCM-SIV modes of operation, the Ascon modes of operation, etc., to generate, for each message stored in the transmission queue 262 that is to be transmitted, a corresponding communication frame that represents the secured message.

Again, the secured messages that are transmitted and received may comprise communication frames that comply with any suitable communication protocol. For instance, the secured message may have a format corresponding to an Ethernet communication frame, such as a 10BASE-T1S communication frame or a 10BASE-T1L communication frame for instance. Thus, FIGs. 10A-10B illustrate examples of at least a portion of a communication frame that may be transmitted via the node 250. With reference to FIG. 10A, the communication frame 1000 may include, for example, one or more fields of the communication frames 400, 450, as shown and discussed above with respect to FIGs. 4A and 4B. However, it is noted that the communication frame 1000 may be generated in accordance with the Ethernet and MACsec security protocols combined with use of the control plane security solutions as discussed in Section I. Thus, the communication frame 1000 may be referred to herein as an "IKAsec" Ethernet frame to denote the secured nature of such frames using a combination of the IKA and MACsec operations as discussed in Section I. The communication frame 1050 as shown in FIG. 10B may represent he same type of communication frame as that shown in FIG. 10A, with the communication frame 1050 illustrating additional detail with respect to the various fields.

Thus, the communication frames 1000, 1050 may include any suitable number of fields. However, for Ethernet-based communication frames, it will be understood that alternate, fewer, or additional fields may be present. For instance, the FV field 408, 458 as discussed in Section I may be replaced with the packet number (PN) field for Ethernet-based communication frames, as noted above. The messages stored in the transmission queue 262 may thus include a subset of any of the fields of the communication frames 1000, 1050. For example, the messages stored in the transmission queue 262 may comprise one or more fields of the communication frames 1000, 1050, which may be used to generate a corresponding secured message for transmission. That is, the application of the temporary session key to the contents of a message (e.g. the payload) stored in the transmission queue 262 functions to "secure" the message, thereby generating a secured message for transmission.

The communication frames 1000, 1050 may therefore comprise parameters that identify the transmitting node and/or one or more destination nodes in accordance with a respective Ethernet protocol, such as the source address (SA) and destination address (DA) fields for instance. This information may form part of a Protocol Control Information (PCI) field, for example. The communication frames 1000, 1050 may also include a port field and a key number (KN) field (which may comprise, for instance, the MACsec Ethertype), and a SecTAG field, as shown in FIG. 10A. As shown in FIG. 10B, the SecTAG field may, for instance, comprise fields defined in accordance with the MACsec standard such as for instance the TAG Control Information (TCI), Association Number (AN), Short Length (SL), Packet Number (PN), a Secure Channel Identifier (SCI) (not shown), etc. Additionally, the communication frames 1000, 1050 may include a payload (e.g. user data as shown in FIG. 10A), and an integrity check value (ICV) field.

Additionally or alternatively, for Ethernet and MACsec, the communication frame 1050 may include an Ethernet PCI field at the start of the Ethernet frame (e.g. the Ethernet PCI, of the source address and destination address), and an additional PCI that may computed via the IKA process as described in Section I, which may be referred to herein as an IKA PCI and begin with its own EtherType value. Additionally or alternatively, and continuing the example for Ethernet and MACsec, the Ethernet communication frames 1000, 1050 may comprise a MACsec PCI field, which begins with its own EtherType value and includes the SecTAG (which also contains the packet number). In this way, the secure message handler 208 may (via software, hardware, or combinations of these) use the IKA PCI to generate the temporary session key, which is then supplied to the MACsec block (e.g. the MACsec block 208.4 or an instantiated MACsec block generated via the processing circuitry 208.2 if implemented in software) as a new secure channel. The MACsec block may then utilize its own MACsec PCI using the temporary session key to generate the secured message for transmission.

The processing circuitry 208.2 may compute one or more of the fields of the Ethernet communication frame 1000, 1050 as part of the content of the unsecured messages that are stored in the transmission queue 262. The processing circuitry 208.2 may compute the data that is encoded as each of the fields of the communication frame 1000, 1050 in accordance with the particular communication protocol that is implemented. Again, the processing circuitry 208.2 may compute the PCI in its own EtherType, as well as the corresponding key number and port values. Additionally, the processing circuitry 208.2 is configured to determine the packet number for the port in accordance with the particular communication protocol that is implemented (e.g. Ethernet/MACsec).

Again, the key number (KN) field may contain a key number value that is identified with the key counter value stored in the non-volatile memory 204 for a corresponding shared key, as discussed in Section I, or a representation of the key counter value as discussed above with respect to Section I. Thus, the key number contained in the KN field may correspond, for instance, to the key counter value or the representation of the key counter values as discussed above with respect to the CNT fields 406, 456, for instance, as shown in FIGs. 4A and 4B.

In this way, the key number value corresponding to the KN field may represent the key number for the specific shared key that is being used for transmission of the secure message on any of the secured channels. The key number value stored in the non-volatile memory 204 may comprise a bit string of any suitable length, and may be identified for example with any of the key counter values as discussed in Section I above. And, as discussed in Section I, the transmitted key number value may correspond to the entirety of or a representation of (e.g. a predetermined number or lower significant bits) the KN value stored in the non-volatile memory 206. Thus, the term "key number" as used throughout this Section with respect to the transmitted value in a secured message may correspond to either the full length of the key number used to generate the temporary session key or a representation of (e.g. a truncation of lower bits) of the full length of this key number.

Also, it is noted that in Section I, multiple secure zones may be supported, each having its own key counter value and pre-shared long-term key, as shown in FIG. 2A. In this Section, the focus is on the use of secure channels, as a given secure channel is associated with exactly one secure zone, and the SCI may be used to index each secure zone. Therefore, and referring now back to FIG. 2D, the node 200 may store a separate key number for each shared key in a similar manner as discussed in Section I with respect to the node 200 storing a separate key counter value per secure zone. Each of the key number values are shown in FIG. 2D as being stored in the non-volatile memory 204 for each shared key A, B, C, and D (e.g. KN.A, KN.B, KN.C, KN.D).

Again, the node 250 may generate the temporary session key that is used for the transmission of the secured message, and may then use the temporary session key for an authentication only or for an authenticated and encrypted transmission of the secured message. Thus, the temporary session key may be generated in this manner using any suitable type of authentication only or authentication and encryption scheme, as discussed herein. To do so, and referring now back to FIG. 2D, the session key generator 202 (which may comprise any suitable hardware, software, or combinations of these) may compute a corresponding temporary session key using any suitable cryptographic function that receives any suitable number and/or type of inputs. These inputs may include the current key number (KN) value that is stored in the non-volatile memory 204.

As an illustrative example, the session key generator 202 may utilize a key derivation function (KDF) to calculate the temporary session key using any suitable information that ensures the temporary session key is (e.g. uniquely) generated for each transmission in accordance with that secured message's particular secure channel. Thus, reference is now made to FIG. 2B, which illustrates the use of a KDF to generate session keys. Continuing this example, the session key generator 202 may thus provide, as inputs to any suitable cryptographic such as a KDF for example, the shared key for the node 250, the current key number for that corresponding shared key, and (as the additional input(s)), data such as channel information that indicates a secure channel of the secured message to be transmitted.

The channel information may comprise, for instance, direct channel information with respect to the secured channel such as the SCI provided by the SCI field. Alternatively, the channel information may comprise inferred information regarding the secure channel of the secured message. For instance, the MACsec SecTAG field may comprise the SCI to provide the direct secure channel information, or the secure channel information may alternatively be inferred (e.g. via the receiving node) from the source address and port number that is transmitted using any suitable correlation techniques. Of course, the temporary session key may be generated using alternate or additional inputs, in various embodiments. As another example, the KDF may receive, as one or more of the additional inputs, alternate inferred information that indicates a secure channel of the secured message to be transmitted, such as any suitable indication of an online or active status of any of the nodes, or any other parameters of the Ethernet PCI, the IKA PCI (IPCI) the MACsec PCI (MPCI), etc., instead of or in addition to the SCI.

Again, the node 250 is configured to transmit any suitable number of secured messages over time in accordance with a transmission schedule that selects messages from the transmission queue 262, each secured message being identified with a respective secure channel as noted herein. The session key generator 202 is thus configured to generate the temporary session key for each secured message transmission using the various inputs to the KDF each time a secured message is generated and transmitted. In an embodiment, the volatile memory 256 may thus store a single temporary session key in the volatile memory 256 "on the fly" as each secured message is transmitted, which is then overwritten for each transmitted (e.g. subsequent) secure message. In other words, the processing circuitry 208.2 stores the temporary session key in the volatile memory 256 as a single temporary session key, which may then be overwritten each time another secured message is transmitted, with the updated temporary session key being used for each individual secured message transmission as noted herein. In this way, because the processing circuitry 208.2 overwrites the temporary session key stored in the volatile memory 256 for each secured message transmission, it is also ensured that the temporary session key is overwritten for secured messages transmitted on different secure channels, with a different temporary session key being used in each case. The overwriting of the temporary session key may comprise, for instance, the use of a standardized interface for setting keys and secure channel identifiers.

Thus, the session key generator 202 may implement the same KDF to generate the temporary session key for each secure message transmission, which may use any of the secure channels. The temporary session key will thus be unique among each of the transmitted secured messages per secure channel (due to the channel information differing between secured channels). Again, the processing circuitry 208.2 may generate the secured message for transmission by applying the temporary session key to the message data stored in the transmission queue 262. For instance, the processing circuitry 208.2 may generate the payload as either plaintext that is part of an authentication only message, or the payload may be omitted in such a case. Alternatively, the payload may represent data that has been encrypted via the node 250 (e.g. ciphertext), as described in Section I above for example, using the temporary session key.

With respect to the ICV, the processing circuitry 208.2 may also generate this value in accordance with any suitable cryptographic function, which may be a function of the particular communication protocol that is implemented. Thus, the ICV may be generated in accordance with any cryptographic algorithm utilized by the MACsec standard for instance, which uses the temporary session key (e.g. the MACsec-defined pre-shared session key (SAK). As one example, the ICV may be generated using inputs such as a source address, a destination address, the temporary session key, the SCI, the packet number, and the plaintext of the secured message (e.g. the plaintext payload).

In any event, based upon the particular cryptographic function that is used to compute the ICV, the ICV field may be generated using the same key as that used for the encryption of data (i.e. the encrypted payload). Thus, the ICV may be generated and the data encrypted using the temporary session key. Therefore, for authentication purposes, the node 250 may utilize the temporary session key to compute the ICV, whereas for authenticated and encrypted secured messages, the node 250 may use the temporary session key to compute the ICV and the encrypted payload. For both secured message types, the ICV is verified via a receiving node to establish authentication of the secured message, as further discussed herein.

Thus, once the message is stored in the transmission queue 262 for a specific secured channel, the secured message may then be transmitted by the node 250 in accordance with the transmission schedule as noted above. To do so, the communication circuitry 208.1 of the secure message handler 208 may transmit the secured message by securing the message stored in the transmission queue 262, which is then transmitted to the network via the data interface 210 and received by other interconnected nodes in the network. Other nodes having a receive secure channel configured to receive such secured messages may thus authenticate or authenticate and decrypt such secured messages in accordance with their own single multiplexed secure channel and temporary session key, as discussed in further detail below. Again, the transmission of the secured message to a suitable interconnected node network via the communication circuitry 208.1, as well as its receipt via any of the nodes within the network, may be performed in accordance with any suitable communication protocol, such as an Ethernet-based communication protocol that implements the MACsec standard for security (e.g. a 10BASE-T1S or a 10BASE-T1L Ethernet protocol).

As an illustrative example, the node 250 may achieve secure channel multiplexing as described herein via the processing circuitry 208.2 generating (e.g. via execution of the program memory 208.3) a single secure channel in a MACsec block (e.g. via instantiation). This may be performed, for example, in accordance with the MACsec-defined Layer Management Interface (LMI). The processing circuitry 208.2 is also configured to delete the MACsec secure channel after a data transmission or, alternatively, to continue to utilize the MACsec secure channel until a subsequent secured message is transmitted using a different secure channel. Thus, it is noted that the MACsec block realization in this manner may be performed using software, hardware, or combination of these.

For example, an alternate hardware-specific implementation of the MACsec block realization may be identified with the MACsec block 208.4, which is optional and may not be present for software-based implementations. The MACsec block 208.4 may form part of the secure message handler 208 as shown in FIG. 2D, and may include any suitable number and/or type of components configured to perform configurable MACsec-defined LMI operations.

### B. Receiving Operation

The node 250 as discussed above with respect to FIG. 2D may perform both transmission and receiving operations with respect to secured messages. Additionally, any of the nodes within the system of interconnected nodes as discussed herein may be configured to transmit and receive secured messages. Therefore, although the functions of transmitting and receiving operations are described separately, this is for ease of explanation, and the node 250 may transmit and/or receive secured messages at any time.

Thus, the node 250 is configured to receive secured messages that are transmitted to the interconnected network using the communication circuitry 208.1 via the data interface 210, as discussed herein. Again, the secured messages may be received in this manner in accordance with any suitable communication protocols, such as an Ethernet communication protocol, which may include a 10BASE-T1S or a 10BASE-T1L Ethernet protocols, for instance. Thus, as discussed in the context of a receiving node, the node 250 may be identified, for instance, with the node D as shown in FIG. 8B. Accordingly, the communication circuitry 208.1 may receive any suitable number of secured messages that are transmitted to the interconnected network of nodes, each being identified with a respective secure channel as discussed herein.

As noted above, the node 250 may store a copy of the shared key associated with each transmitting node from which the node 250 receives secured messages via one of several secure channels, which are referred to as receive secure channels in this context. For example, if the node 250 operates as the node D as shown in FIG. 8B, then the shared keys A and B stored in the non-volatile memory 204 may correspond to the shared keys for the nodes A and B. Additionally, and as noted above for the node 250 when transmitting, the node 250 also stores a current key number (KN) per shared key, which is used to generate the temporary session key for authenticating or authenticating and decrypting secured messages received via each of the secured channels associated with the shared key. For example, if the node 250 operates as the node D as shown in FIG. 8B, then the key numbers KN.A and KN.B stored in the non-volatile memory 204 may correspond to the key numbers as discussed herein.

Again, the node 250 may receive each secured message in accordance with any suitable type of communication protocol, and thus each received secured message may, for example, comprise a communication frame such as the communication frames 1000, 1050 as discussed above and as shown in FIGs. 10A-10B. Thus, each received secured message may comprise channel information and the key number, with the channel information indicating a secure channel of the secured message. Again, the channel information may comprise, for example, the SCI or other suitable information to allow the secure channel to be inferred.

Upon receiving the secured message, the node 250 is configured to generate the temporary session key, which is then stored in the volatile memory 256, as discussed above with respect to the node 250 when transmitting the secured message. The temporary session key may be generated in any suitable manner, such as those as discussed above for the node 250 when transmitting secured messages, and may be performed via hardware, software, or combinations of these. As one example, the session key generator 202 may execute the instructions stored in the program memory 208.3 to generate the temporary session key or, alternatively, the session key generator 202 may generate the temporary session key using dedicated hardware such as a cryptographic hardware accelerator, which may form part of the session key generator 202. Any such session key generation techniques may likewise be implemented by the node 250 when transmitting secured messages.

Thus, the session key generator 202 is configured to generate the temporary session key using the shared key identified with the node from which the secured message is received, the channel information, and the key number, as discussed above with respect to the transmission operation of the node 250. For example, the node 250 may generate the temporary session key in the same manner as the transmitting node, which may include the use of the same KDF and inputs to the KDF as discussed above. Thus, the receiving node is configured to determine the current secure channel, which is then used to identify the pairing between the stored key number and the stored shared key in the non-volatile memory 204. This shared key and corresponding key number may then be used to generate the temporary session key, as discussed herein. For instance, and as described above in Section I, the session key generator 202 may use the key number and corresponding shared key stored in the non-volatile memory 204 as an input to the KDF (along with any other suitable inputs) to generate the temporary session key, which is then stored in the volatile memory 256 as discussed herein.

Once the temporary session key is generated and stored in the volatile memory 256, the processing circuitry 208.2 is configured to authenticate or authenticate and decrypt a content of the received secured message using the temporary session key. This may be done in accordance with any suitable cryptographic authentication and decryption process, such as any of those discussed above with respect to the manner in which the secured message was transmitted for example. As one illustrative example, the processing circuitry 208.2 may authenticate the secured message by computing an ICV value using the temporary session key in accordance with AES-GCM-based protocols (which is used in MACsec), and comparing this ICV to the ICV contained in the secured message. Additionally, the processing circuitry 208.2 may decrypt the contents of the payload using the temporary session key in accordance with any suitable cryptographic algorithm or process, including those described above.

Again, the node 250 may receive any suitable number of secured messages associated with different secure channels via a single secure channel, thereby multiplexing multiple secure channels into one for the purposes of receiving the secure messages. To do so, the processing circuitry 208.2 may be configured to generate a single secure channel that is used to receive each of the plurality of secured messages using any suitable techniques, which may be a function of the communication protocol used to transmit and receive the secured messages within the interconnected network. As noted above for the transmission operation, the processing circuitry 208.2 may be configured to execute the instructions stored in the program memory 208.3 to generate a single secure channel in accordance with a (MACsec)-defined Layer Management Interface (LMI). Alternatively, the MACsec block 208.4 may be used for this purpose. This may include the same processes as described above for the transmission operation, during which the single secure channel was created in a MACsec block (e.g. via instantiation) or dedicated hardware via the MACsec block 208.4. This single secure channel may then be implemented for a received secured message irrespective of the secure channel.

Additionally, and as was the case for the temporary session key, the single secure channel generated in this manner may be temporary. For instance, regardless of the manner used to generate the single secure channel instance, the processing circuitry 208.2 may be configured to delete the single secure channel instance after the secured message has been received. This may include, for example, generating an updated secure channel for other received secured messages and/or overwriting the single secure channel instance with the updated one. This deleting and updating process may be performed as each new secured message is received, regardless of the secure channel used to receive subsequent secured messages. Alternatively, the single secure channel instance may be deleted and updated with a new secure channel instance when the next secure message is received via a different secure channel than the previously received secured message.

Again, the node 250 is configured to receive any suitable number of secured messages over time. The session key generator 202 is thus configured to generate the temporary session key using the various inputs to the KDF each time a secured message is received. In an embodiment, the volatile memory 256 may thus generate and store the single temporary session key "on the fly" as each secured message is received, which is then overwritten based upon receiving another (e.g. subsequent) secured message. In other words, the processing circuitry 208.2 stores the temporary session key in the volatile memory 256 as a single temporary session key, which may then be overwritten each time another secured message is received, with the updated temporary session key being used for authenticating or authenticating and decrypting each individually received secured message as noted herein. Thus, and as described above for the transmission operation, the temporary session key is overwritten for secured messages received on different secure channels, with a different temporary session key being used in each case.

### C. Example Process Flows

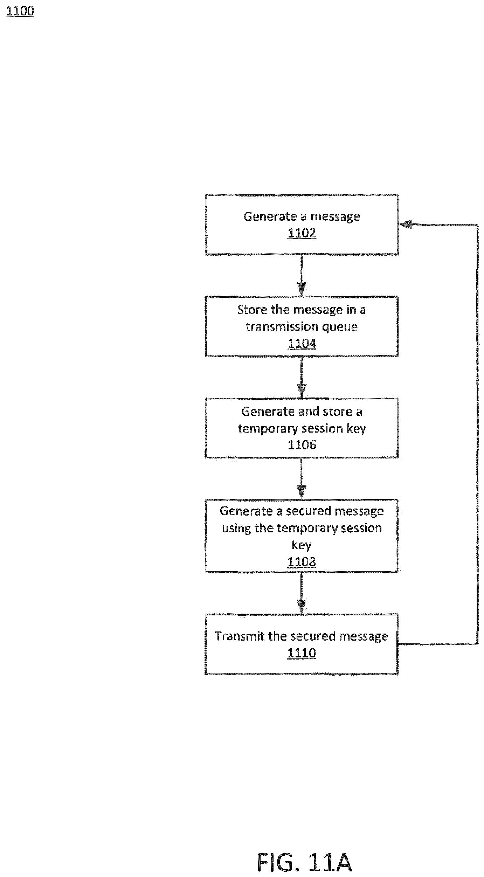

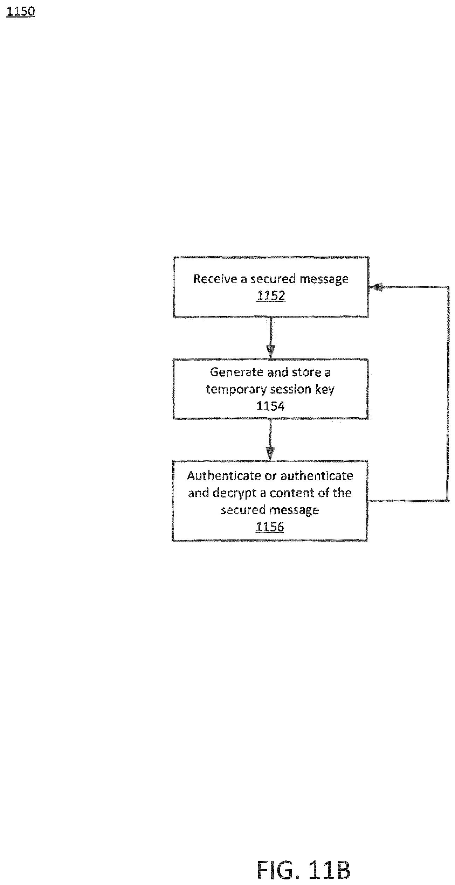

FIGs. 11A and 11B illustrate process flows used by transmitting and receiving nodes to transmit and receive secured messages, in accordance with one or more embodiments of the present disclosure. With reference to FIGs. 11A and 11B, the process flows may comprise a method executed by and/or otherwise associated with any suitable number and/or type of components such as one or more processors (processing circuitry), hardware components, executed instructions (e.g., software components) or combinations of these. The components may be associated with one or more components of the node 250 as discussed herein. The flows 1100, 1150 may include alternate or additional blocks that are not shown in FIGs. 11A and 11B for purposes of brevity, and may be performed in a different order than shown. Moreover, some blocks may be optional. Additionally, any of the statements made with respect to the node 250 operating in a transmission or a receiving mode are also applicable to the process flows as discussed herein with respect to FIGs. 11A and 11B.

Specifically, FIG. 11A provides additional detail regarding a process flow implemented by a node upon generating and transmitting secured messages. FIG. 11B provides additional detail regarding a process flow implemented by a node upon receiving secured messages.

Referring first to FIG. 11A, the process flow 1100 may be implemented via any one of the nodes discussed herein, such as any of the nodes included in the system 850 for example, as shown in FIG. 8B, when performing a secured message transmission. This may include, for example, the node 250 as discussed herein with respect to FIG. 2D, or any of the nodes A, B, C, D as shown in FIG. 8B

The process flow 1100 begins with the generation (block 1102) of a message. This may include, for example, generating unsecured messages that are subsequently converted to secured messages for transmission as discussed herein. The generation of the unsecured message may include, for instance, generating data content such as one or more fields of a communication frame, which may include the contents of the payload, the PCI field, the SCI field, the KN field, the PN field, etc., as discussed above with respect to the communication frames 1000, 1050.

The process flow 1100 further comprises storing (block 1104) the unsecured message in in a transmission queue, which may comprise the transmission queue 262, for example. Although a single instance of an unsecured message being generated and stored is shown in FIG. 11A, any suitable number of such messages may be generated and stored in advance of their conversion to secured messages and subsequent transmission.

The process flow 1100 further comprises generating and storing (block 1106) a temporary session key. This may include, for example, the generation of the single temporary session key, which is then stored in the volatile memory 256 of the node 250, as discussed above. Again, the temporary session key may be generated in this manner in accordance with any suitable cryptographic function, including those described herein. This may include, for example, the use of a KDF that receives, as inputs, the node's shared key, channel information, and a key number, with the channel information indicating a secure channel of the message.

The process flow 1100 further comprises generating (block 1108) a secured message using the temporary session key and the contents of the stored (block 1104) message. This may include, for example, using the temporary session key to generate the ICV for an authentication only secured message, or additionally encrypting the payload of the secured message using the temporary session key. Again, the authentication and encryption processes used to generate the secured message may be performed in accordance with any suitable cryptographic algorithms or techniques, such as those defined in accordance with the MACsec standard for instance.

As noted above, the process flow 1100 may be repeated for each secured message transmission. For instance, the stored temporary session key may be overwritten with an updated temporary session key for each secured message transmission. This is depicted in FIG. 11A as the flow from the block 1110 to the block 1102.

Referring now to FIG. 11B, the process flow 1150 may also be implemented via any one of the nodes discussed herein, such as any of the nodes included in the system 850 for example, as shown in FIG. 8B, when receiving a secured message. This may include, for example, the node 250 as discussed herein with respect to FIG. 2D, or the node D as shown in FIG. 8B.

The process flow 1150 begins with receiving (block 1152) a secured message. Again, the secured message may be received in accordance with any suitable communication protocol and include any suitable number of fields, such as the communication frames 1000, 1050 as discussed herein with respect to FIGs. 10A-B. The secured message may also be received via any one of a set of secure channels.

The process flow 1150 further comprises generating and storing (block 1154) a temporary session key. This may include, for example, the generation of the single temporary session key, which is then stored in the volatile memory 256 of the node 250, as discussed above. Again, the temporary session key may be generated in this manner in accordance with any suitable cryptographic function, including those described herein. This may include, for example, the use of a KDF that receives, as inputs, the node's shared key, channel information, and a key number, with the channel information indicating a secure channel of the message. Again, the temporary session key may be generated using the key number contained in the secured message. Thus, the generation and storing (block 1154) of the temporary session key may include the generation of the same key number used by the transmitting node to generate and transmit the secured message, as noted above.

The process flow 1150 further comprises authenticating (block 1156) or authenticating and decrypting (block 1156) a content of the received secured message using the temporary session key. This may include, for instance, verifying the ICV field in the received secured message to authenticate the secured message, and additionally using the stored (block 1154) temporary session key to decrypt the payload of the secured message, as noted herein.

As noted above, the process flow 1150 may be repeated for each secure message that is received. For instance, the stored temporary session key may be overwritten with an updated temporary session key as each secured message is received. This is depicted in FIG. 11B as the flow from the block 1156 to the block 1152.

### EXAMPLES

The techniques of this disclosure may also be described in the following examples.

Example 1. A node in a system of interconnected nodes configured to communicate over a network, the node comprising: communication circuitry configured to receive, via the network, a secured message from among a plurality of secured messages, each one of the plurality of secured messages being identified with a respective secure channel from among a plurality of secure channels, wherein the secured message comprises channel information and a key number, the channel information indicating a secure channel of the secured message; and processing circuitry configured to: generate, for the received secured message, a temporary session key in accordance with a cryptographic function that utilizes a shared secret, the channel information, and the key number; and authenticate or authenticate and decrypt a content of the received secured message using the temporary session key.

Example 2. The node of Example 1, wherein the channel information comprises a secure channel indicator (SCI).

Example 3. The node of any combination of Examples 1-2, further comprising: a volatile memory, wherein the processing circuitry is configured to store the temporary session key in the volatile memory.

Example 4. The node of any combination of Examples 1-3, wherein the processing circuitry is configured to store a single temporary session key in the volatile memory, which is overwritten based upon any other received one of the plurality of secured messages.

Example 5. The node of any combination of Examples 1-4, wherein the processing circuitry is configured to generate, based upon other received ones of the plurality of secured messages identified with different secure channels, respective temporary session keys.

Example 6. The node of any combination of Examples 1-5, wherein the processing circuitry is configured to overwrite a prior temporary session key stored in the volatile memory with an updated temporary session key generated for another received one of the plurality of secured messages.

Example 7. The node of any combination of Examples 1-6, wherein the processing circuitry is configured to generate, in accordance with a Media Access Control security (MACsec)-defined Layer Management Interface (LMI), a single secure channel that is used to receive each of the plurality of secured messages.

Example 8. The node of any combination of Examples 1-7, wherein the processing circuitry is configured to delete the single secure channel and to generate an updated secure channel for another received one of the plurality of secured messages.

Example 9. The node of any combination of Examples 1-8, wherein the communication circuitry is configured to receive the plurality of secured messages via an Ethernet communication protocol.

Example 10. The node of any combination of Examples 1-9, wherein the Ethernet protocol comprises a 10BASE-T1S or a 10BASE-T1L Ethernet protocol.

Example 11. A computer-implemented method for a node in a system of interconnected nodes configured to communicate over a network, comprising: receiving, via the network, a secured message from among a plurality of secured messages, each one of the plurality of secured messages being identified with a respective secure channel from among a plurality of secure channels, wherein the secured message comprises channel information and a key number, the channel information indicating a secure channel of the secured message; generating, for the received secured message, a temporary session key in accordance with a cryptographic function that utilizes a shared secret, the channel information, and the key number; and authenticating or authenticating and decrypting a content of the received secured message using the temporary session key.

Example 12. The method of Example 11, wherein the channel information comprises a secure channel indicator (SCI).

Example 13. The method of any combination of Examples 11-12, further comprising: storing the temporary session key in a volatile memory.

Example 14. The method of any combination of Examples 11-13, further comprising: storing a single temporary session key in the volatile memory; and overwriting the single temporary session key based upon any other received one of the plurality of secured messages.

Example 15. The method of any combination of Examples 11-14, further comprising: generating, based upon other received ones of the plurality of secured messages identified with different secure channels, a respective temporary session key.

Example 16. The method of any combination of Examples 11-15, further comprising: overwriting a prior temporary session key stored in the volatile memory with an updated temporary session key generated for another received one of the plurality of secured messages.

Example 17. The method of any combination of Examples 11-16, further comprising: generating, in accordance with a Media Access Control security (MACsec)-defined Layer Management Interface (LMI), a single secure channel that is used to receive each of the plurality of secured messages.

Example 18. The method of any combination of Examples 11-17, further comprising: deleting the single secure channel; and generating an updated secure channel for another received one of the plurality of secured messages.

Example 19. The method of any combination of Examples 11-18, wherein the plurality of secured messages are received via an Ethernet communication protocol.

Example 20. The method of any combination of Examples 11-19, wherein the Ethernet protocol comprises a 10BASE-T1S Ethernet protocol.

Example 21. A node in a system of interconnected nodes configured to communicate over a network, the node comprising: processing circuitry configured to: generate a message, wherein the message is from among a plurality of messages, each one of the plurality of messages being identified with a respective secure channel from among a plurality of secure channels, and wherein the message comprises secure channel information and a key number, the secure channel information indicating a secure channel of the message, generate a temporary session key in accordance with a cryptographic function that utilizes a shared secret, the secure channel information, and the key number; and generate, from the message, a secured message using the temporary session key; and communication circuitry configured to transmit, via the network, the secured message.

Example 22. The node of Example 21, further comprising: a volatile memory, wherein the processing circuitry is configured to store, as a single temporary session key in the volatile memory, the temporary session key, which is overwritten based upon a transmission of any one of a plurality of secured messages.

Example 23. The node of any combination of Examples 21-22, wherein the processing circuitry is configured to generate, based upon other transmitted ones of a plurality of secured messages identified with a different secure channel, respective temporary session keys.

Example 24. The node of any combination of Examples 21-23, wherein the communication circuitry is configured to transmit the secured message via an Ethernet communication protocol.

Example 25. The node of any combination of Examples 21-24, wherein the Ethernet protocol comprises a 10BASE-T1S or a 10BASE-T1L Ethernet protocol.

An apparatus as shown and described.

A method as shown and described.

### CONCLUSION

Although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

It is further to be noted that specific terms used in the description and claims may be interpreted in a very broad sense. For example, the terms "circuit" or "circuitry" used herein are to be interpreted in a sense not only including hardware but also software, firmware or any combinations thereof. The term "data" may be interpreted to include any form of representation data. The term "information" may in addition to any form of digital information also include other forms of representing information. The term "entity" or "unit" may in embodiments include any device, apparatus circuits, hardware, software, firmware, chips, or other semiconductors as well as logical units or physical implementations of protocol layers etc. Furthermore, the terms "coupled" or "connected" may be interpreted in a broad sense not only covering direct but also indirect coupling.

It is further to be noted that methods disclosed in the specification or in the claims may be implemented by a device having means for performing each of the respective steps of these methods.

Although specific embodiments have been illustrated and described herein, it will be appreciated by those of ordinary skill in the art that a variety of alternate and/or equivalent implementations may be substituted for the specific embodiments shown and described without departing from the scope of the present disclosure. This disclosure is intended to cover any adaptations or variations of the specific embodiments discussed herein.

## Claims

1. A node in a system of interconnected nodes configured to communicate over a network, the node comprising:
communication circuitry (208.1) configured to receive, via the network, a secured message from among a plurality of secured messages, each one of the plurality of secured messages being identified with a respective secure channel from among a plurality of secure channels,
wherein the secured message comprises channel information and a key number, the channel information indicating a secure channel of the secured message; and
processing circuitry (208.2) configured to:
generate, for the received secured message, a temporary session key in accordance with a cryptographic function that utilizes a shared secret, the channel information, and the key number; and
authenticate or authenticate and decrypt a content of the received secured message using the temporary session key.

2. The node of claim 1, wherein the channel information comprises a secure channel indicator, SCI.

3. The node of claim 1 or 2, further comprising:
a volatile memory (206),
wherein the processing circuitry (208.2) is configured to store the temporary session key in the volatile memory (206).

4. The node of claim 3, wherein the processing circuitry (208.2) is configured to store a single temporary session key in the volatile memory (206), which is overwritten based upon any other received one of the plurality of secured messages.

5. The node of any of the preceding claims, wherein the processing circuitry (208.2) is configured to generate, based upon other received ones of the plurality of secured messages identified with different secure channels, respective temporary session keys.

6. The node of any of claims 3 to 5, wherein the processing circuitry (208.2) is configured to overwrite a prior temporary session key stored in the volatile memory (206) with an updated temporary session key generated for another received one of the plurality of secured messages.

7. The node of any of the preceding claims, wherein the processing circuitry (208.2) is configured to generate, in accordance with a Media Access Control security, MACsec,-defined Layer Management Interface (LMI), a single secure channel that is used to receive each of the plurality of secured messages.

8. The node of claim 7, wherein the processing circuitry (208.2) is configured to delete the single secure channel and to generate an updated secure channel for another received one of the plurality of secured messages.

9. The node of any of the preceding claims, wherein the communication circuitry (208.1) is configured to receive the plurality of secured messages via an Ethernet communication protocol.

10. The node of claim 9, wherein the Ethernet protocol comprises a 10BASE-T1S or a 10BASE-T1L Ethernet protocol.

11. A computer-implemented method for a node in a system of interconnected nodes configured to communicate over a network, comprising:
receiving, via the network, a secured message from among a plurality of secured messages, each one of the plurality of secured messages being identified with a respective secure channel from among a plurality of secure channels,
wherein the secured message comprises channel information and a key number, the channel information indicating a secure channel of the secured message;
generating, for the received secured message, a temporary session key in accordance with a cryptographic function that utilizes a shared secret, the channel information, and the key number; and
authenticating or authenticating and decrypting a content of the received secured message using the temporary session key.

12. The method of claim 11, further comprising:
generating, based upon other received ones of the plurality of secured messages identified with different secure channels, a respective temporary session key.

13. A node in a system of interconnected nodes configured to communicate over a network, the node comprising:
processing circuitry (208.2) configured to:
generate a message,
wherein the message is from among a plurality of messages, each one of the plurality of messages being identified with a respective secure channel from among a plurality of secure channels, and
wherein the message comprises secure channel information and a key number, the secure channel information indicating a secure channel of the message,
generate a temporary session key in accordance with a cryptographic function that utilizes a shared secret, the secure channel information, and the key number; and
generate, from the message, a secured message using the temporary session key; and
communication circuitry (208.1) configured to transmit, via the network, the secured message.

14. The node of claim 13, further comprising:
a volatile memory (206),
wherein the processing circuitry (208.2) is configured to store, as a single temporary session key in the volatile memory (206), the temporary session key, which is overwritten based upon a transmission of any one of a plurality of secured messages.

15. The node of claim 13 or 14, wherein the processing circuitry (208.2) is configured to generate, based upon other transmitted ones of a plurality of secured messages identified with a different secure channel, respective temporary session keys.
